# EUROPEAN PATENT APPLICATION

(11) **EP 3 702 545 A1**
(43) Date of publication of application: **02.09.2020**
(21) Application number: 18895154.5
(22) Date of filing: 26.12.2018
(51) Int. Cl.: E03D 5/016, B01D 61/58, B01D 69/08, C02F 1/44, C02F 3/04, C02F 3/06, C02F 3/30

(54) **PURIFICATION SYSTEM**

(30) Priority: 28.12.2017 JP 2017253947
(71) Applicant: Nishimu Electronics Industries Co., Ltd., Fukuoka-shi, Fukuoka 812-8539 (JP)
(72) Inventor: KURAYAMA Koji, Fukuoka-shi, Fukuoka 812-8539 (JP); ARAMAKI Yuji, Fukuoka-shi, Fukuoka 812-8539 (JP); AMAMOTO Ryosuke, Fukuoka-shi, Fukuoka 812-8539 (JP); WADA Masaru, Fukuoka-shi, Fukuoka 812-8539 (JP); HARADA Chikara, Fukuoka-shi, Fukuoka 812-8539 (JP); HIGASHI Takahiko, Fukuoka-shi, Fukuoka 812-8539 (JP); KAGENISHI Eiji, Fukuoka-shi, Fukuoka 812-8539 (JP)
(74) Representative: HGF
(86) International application number: PCT/JP2018/047808
(87) International publication number: WO 2019/131745

(57) **Abstract**

The present invention provides a complete-circulation-type bio-toilet system in which adjustment tanks capable of storing water to be treated are arranged before and after a septic tank, thereby enabling stable provision of the system without stopping the system even when the system is in heavy use. In a bio-toilet system 1 that performs microbial treatment on water to be treated containing filth and circulates the water to be treated as washing water, it is provided with: a raw sewage tank 3 into which the water to be treated containing filth discharged from a toilet 2 is fed; a first adjustment tank 4 that stores water to be treated 31 discharged from the raw sewage tank 3 while performing aerobic treatment thereon by aeration and discharges the stored water to be treated 31 by a pump 43; a septic tank 5 that performs microbial treatment on the water to be treated 31 discharged from the first adjustment tank 4; a second adjustment tank 6 that stores the water to be treated 31 discharged from the septic tank 5 while performing anaerobic treatment thereon and discharges the stored water to be treated 31 by a pump 62; a reaction tank 7 that decomposes organic matter in the water to be treated 31 discharged from the second adjustment tank 6; and a washing tank 8 that stores the water to be treated 31 discharged from the reaction tank 7 for use as washing water for a toilet bowl.

## Description

### TECHNICAL FIELD

The present invention relates to a circulation-type purification system utilizing microbial treatment.

### Background Art

There is known a circulation-type bio-toilet system that decomposes excrement by microorganisms and reuses water having been used for washing the excrement as new washing water (for example, see Patent Literature 1). The technique disclosed in Patent Literature 1 is such that in a bio-toilet system 1 where liquid to be treated containing filth when the toilet is washed by washing water is circulated to the washing water through a plurality of tanks, it is provided with: a reception tank 4 that stores the liquid to be treated; a transfer pump that transfers the liquid to be treated stored in the reception tank 4 to the next biological treatment tank 5; a plurality of treatment tanks 5 to 7 that treat the liquid to be treated into the washing liquid; and a washing water tank 8 that stores the washing water thus treated, wherein the transfer pump transfers the liquid to be treated to the next biological treatment tank 5 at a constant flow rate. This bio-toilet system does not require a power supply, or water supply and sewage facilities, so that it can be used without any restrictions at a time when a disaster occurs or in an area where infrastructure is not in place.

### Citation List

### Patent Literature

Patent Literature 1: Japanese Unexamined Patent Application Publication No. 2016-89538

### Summary of Invention

### Technical Problem

However, the bio-toilet system disclosed in Patent Literature 1 does not monitor or control the amount of water of the entire system, so that there is a possibility that the treatments cannot catch up and reclaimed water in an untreated state must be used, for example, when the toilet is in heavy use.

At the same time, since the treatments cannot catch up, the object to be treated may overflow from the tanks, which results in a problem that it leads to an increase in subsequent maintenance work and a failure of the system.

The present invention provides a complete-circulation-type purification system in which adjustment tanks capable of storing water to be treated are arranged before and after a septic tank, thereby enabling stable provision of the system without stopping the system even when the system is in heavy use.

### Solution to Problem

A purification system according to the present invention is a purification system that performs microbial treatment on water to be treated containing filth and circulates the water to be treated as washing water, wherein the purification system is provided with: a raw sewage tank into which the water to be treated containing filth to be discharged is fed; a first adjustment tank that stores the water to be treated discharged from the raw sewage tank while performing aerobic treatment thereon by aeration and discharges the stored water to be treated by a pump; a septic tank that performs microbial treatment on the water to be treated discharged from the first adjustment tank; a second adjustment tank that stores the water to be treated discharged from the septic tank while performing anaerobic treatment thereon and discharges the stored water to be treated by a pump; a reaction tank that decomposes organic matter in the water to be treated discharged from the second adjustment tank; and a washing water tank that stores the water to be treated discharged from the reaction tank for use as washing water.

As described above, the purification system according to the present invention is provided with: a raw sewage tank into which the water to be treated containing filth is fed; a first adjustment tank that stores the water to be treated discharged from the raw sewage tank while performing aerobic treatment thereon by aeration and discharges the stored water to be treated by a pump; a septic tank that performs microbial treatment on the water to be treated discharged from the first adjustment tank; a second adjustment tank that stores the water to be treated discharged from the septic tank while performing anaerobic treatment thereon and discharges the stored water to be treated by a pump; a reaction tank that decomposes organic matter in the water to be treated discharged from the second adjustment tank; and a washing water tank that stores the water to be treated discharged from the reaction tank for use as washing water, so that the first and second adjustment tanks placed at front and rear stages of the treatment in the septic tank can perform microbial treatment preliminarily and, at the same time, can function as buffers that store the water to be treated, resulting in an advantageous effect that it is possible to drive the system stably without stopping the system even when the system is in heavy use.

The purification system according to the present invention is provided with control means for controlling driving of the pump of the second adjustment tank based on at least a storage amount of water to be treated stored in the reaction tank.

As described above, the purification system according to the present invention controls driving of the pump of the second adjustment tank based on at least a storage amount of water to be treated stored in the reaction tank, so that it results in an advantageous effect that it is possible to store the water to be treated in the second adjustment tank when there is enough washing water and to send out an appropriate amount to the reaction tank when the washing water becomes insufficient.

The purification system according to the present invention is provided with control means for controlling driving of the pump of the first adjustment tank based on at least a storage amount of the water to be treated stored in the second adjustment tank.

As described above, the purification system according to the present invention controls driving of the pump of the first adjustment tank based on at least a storage amount of the water to be treated stored in the second adjustment tank, so that it results in an advantageous effect that it is possible to perform an appropriate control that corresponds to the purification treatment, for example, in such a manner as to, when the second adjustment tank has a large amount of water to be treated, determine that the purification treatment has not caught up and then make the water to be treated slowly discharged from the first adjustment tank to the septic tank, and, when the second adjustment tank has a small amount of water to be treated, determine that the purification treatment is sufficiently in time and then make the water to be treated rapidly discharged from the first adjustment tank to the septic tank.

The purification system according to the present invention is provided with control means for controlling driving of the pump of the first adjustment tank based on at least water quality of the water to be treated stored in the second adjustment tank.

As described above, the purification system according to the present invention controls driving of the pump of the first adjustment tank based on at least water quality of the water to be treated stored in the second adjustment tank, so that it results in an advantageous effect that it is possible to perform an appropriate control that corresponds to the state of the purification treatment by determining, based on the water quality information, whether the purification treatment is properly performed or not.

The purification system according to the present invention is such that: the second adjustment tank and the raw sewage tank are arranged adjacent to each other and connected through a piping, a valve being arranged in a middle of the piping; and the second adjustment tank is internally tapered from a position above an upper surface position of the raw sewage tank in the second adjustment tank toward the upper surface position, an opening being provided at a tip of the tapered shape, and the piping extending from the opening being connected to an upper surface portion of the raw sewage tank.

As described above, in the purification system according to the present invention, the second adjustment tank and the raw sewage tank are connected through a piping, a valve is arranged in a middle of the piping, the second adjustment tank is internally tapered from a position above an upper surface position of the raw sewage tank in the second adjustment tank toward the upper surface position, an opening is provided at a tip of the tapered shape, and the piping extending from the opening is connected to an upper surface portion of the raw sewage tank, so that it results in an advantageous effect that it is possible to return untreated filth stored in the tapered tip of the second adjustment tank to the raw sewage tank through the piping and to decompose the returned untreated filth again by microbial treatment.

The purification system according to the present invention is such that: the valve is a solenoid valve; and the purification system is provided with control means for controlling opening of the solenoid valve on a regular or irregular basis.

As described above, in the purification system according to the present invention, the valve is a solenoid valve and the purification system is provided with control means for controlling opening of the solenoid valve on a regular or irregular basis, so that it results in an advantageous effect that it is possible to return untreated filth stored in the tapered tip of the second adjustment tank to the raw sewage tank on a regular or irregular basis by automatic control and to decompose the returned untreated filth again by microbial treatment.

The purification system according to the present invention is such that a bacterial bed bag, in which a contact material on which bacteria are implanted is charged, is placed on inner wall surfaces of the first adjustment tank and the second adjustment tank.

As described above, in the purification system according to the present invention, a bacterial bed bag, in which a contact material on which bacteria are implanted is charged, is placed on inner wall surfaces of the first adjustment tank and the second adjustment tank, so that it results in an advantageous effect that it is possible to treat the water to be treated with higher performance by making the first and second adjustment tanks function as buffers for storing the water to be treated and, at the same time, perform microbial treatment.

Further, a bacterial bed bag, in which a contact material on which bacteria are implanted is charged, is placed, so that it results in an advantageous effect that it is possible to facilitate the maintenance of bacteria and prevent the piping from being clogged with sawdust and the like.

The purification system according to the present invention is provided with: a hollow fiber filter that passes the water to be treated that has passed through the reaction tank; and a reverse osmosis membrane filter that passes the water to be treated that has passed through the hollow fiber filter.

As described above, the purification system according to the present invention is provided with: a hollow fiber filter that passes the water to be treated that has passed through the reaction tank; and a reverse osmosis membrane filter that passes the water to be treated that has passed through the hollow fiber filter, so that it results in an advantageous effect that it is possible to produce, while removing bacteria remaining therein, transparent washing water by removing the color of the water to be treated which has been colored through woody chips of the reaction tank.

Further, rough bacteria are removed with the hollow fiber filter and subsequently fine coloring is removed with the reverse osmosis membrane filter, so that it results in an advantageous effect that it is possible to minimize clogging of the filter to reduce maintenance work.

The purification system according to the present invention is provided with circulation control means for controlling circulating in the system the washing water stored in the washing water tank on a regular or irregular basis.

As described above, the purification system according to the present invention is provided with circulation control means for controlling circulating in the system the washing water stored in the washing water tank on a regular or irregular basis, so that it results in an advantageous effect that, although the washing water stored in the washing water tank may deteriorate when frequency of use is low, it is possible to prevent deterioration of the washing water by circulating the washing water in the system and always use clean washing water.

### Brief Description of Drawings

FIG. 1 is a system configuration diagram showing a configuration of a bio-toilet system according to a first embodiment.
FIG. 2 is a schematic diagram showing the configuration of the bio-toilet system according to the first embodiment.
FIG. 3 is a perspective view showing a structure of a raw sewage tank in the bio-toilet system according to the first embodiment.
FIG. 4A is a cross-sectional view showing the structure of the raw sewage tank in the bio-toilet system according to the first embodiment.
FIG. 4B is a top view showing the structure of the raw sewage tank in the bio-toilet system according to the first embodiment.
FIG. 5 is a diagram showing a structure of a septic tank in the bio-toilet system according to the first embodiment.
FIG. 6 is a diagram showing a structure of a second adjustment tank in the bio-toilet system according to the first embodiment.
FIG. 7 is a diagram showing a structure of a reaction tank in the bio-toilet system according to the first embodiment.
FIG. 8A is a diagram showing a structure of a parking area of the reaction tank in the bio-toilet system according to the first embodiment.
FIG. 8B is a diagram showing a structure of a parking area of the reaction tank in the bio-toilet system according to the first embodiment.
FIG. 8C is a diagram showing a structure of a parking area of the reaction tank in the bio-toilet system according to the first embodiment.
FIG. 8D is a diagram showing a structure of a parking area of the reaction tank in the bio-toilet system according to the first embodiment.
FIGs. 9A and 9B are diagrams showing an example of a mechanism that discharges increased water in the system in the bio-toilet system according to the first embodiment.
FIG. 10 is a diagram showing a configuration when utilizing airflow of a ventilation fan to discharge increased water in the system in the bio-toilet system according to the first embodiment.
FIGs. 11A and 11B are diagrams showing a structure of a raw sewage tank in a bio-toilet system according to a second embodiment.
FIG. 12 is a diagram showing a structure of a second adjustment tank in the bio-toilet system according to the second embodiment.
FIG. 13 is a diagram showing an arrangement relation between a toilet and a raw sewage tank in a conventional bio-toilet system.
FIG. 14 is a diagram showing an arrangement relation between a toilet and a raw sewage tank in a bio-toilet system according to a third embodiment.
FIG. 15 is a perspective view showing a structure of the raw sewage tank in the bio-toilet system according to the third embodiment.
FIG. 16 is a side cross-sectional view of the raw sewage tank in the bio-toilet system according to the third embodiment.
FIG. 17 is a top view of the raw sewage tank in the bio-toilet system according to the third embodiment.
FIG. 18 is a top view of a second raw sewage tank in the bio-toilet system according to the third embodiment.
FIG. 19 is a schematic diagram showing a configuration of a bio-toilet system according to a fourth embodiment.
FIG. 20 is a diagram showing a configuration of a control unit 100 in FIG. 19.
FIG. 21 is a diagram showing a configuration of a piping when cooling air to be circulated in a housing of FIG. 20.
FIG. 22 is a diagram showing a state in which air sent out from a blower is aerated in a first adjustment tank in the bio-toilet system according to the fourth embodiment.
FIG. 23 is a diagram showing a configuration of a piping for air to be circulated in a housing in a bio-toilet system according to a fifth embodiment.
FIG. 24 is a schematic diagram showing a configuration of a bio-toilet system according to a sixth embodiment.

### Description of Embodiments

Hereinafter, embodiments of the present invention will be described. In addition, the same reference numerals are given to the same elements throughout the embodiments.

### (First Embodiment of the Present Invention)

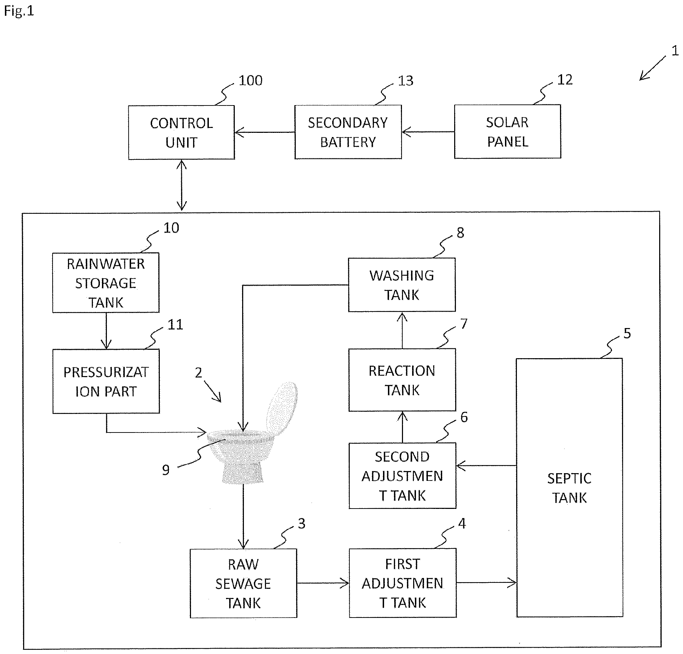

A purification system according to the present embodiment will be described with reference to FIGs. 1 to 9. In the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet. The bio-toilet system according to the present embodiment is a circulation-type bio-toilet system that can reuse water having been used for washing a toilet as new washing water again by performing microbial treatment on said water. In addition, it may be a completely-independent-type circulation-type bio-toilet system that can function independently by utilizing natural energy such as sunlight as needed energy.

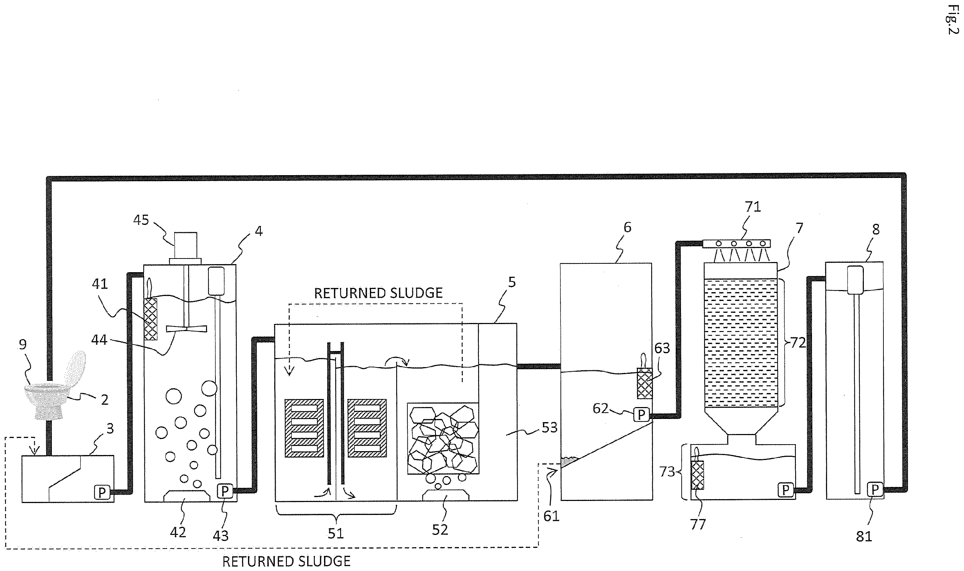

FIG. 1 is a system configuration diagram showing a configuration of a bio-toilet system according to the present embodiment, and FIG. 2 is a schematic diagram showing the configuration of the bio-toilet system according to the present embodiment. The bio-toilet system 1 is provided with: a raw sewage tank 3 that physically pulverizes filth that has been flushed from a toilet 2; a first adjustment tank 4 that performs aerobic treatment by anaerobic bacteria on, while storing, water to be treated 31 containing the pulverized filth; a septic tank 5 that performs first anaerobic treatment by anaerobic bacteria and second aerobic treatment by aerobic bacteria; a second adjustment tank 6 that performs anaerobic treatment by anaerobic bacteria on, while storing, the water to be treated that has been treated in the septic tank 5; a reaction tank 7 that decomposes organic substances contained in the water to be treated into carbon dioxide and water; a washing tank 8 that stores the water to be treated that has been purified as reclaimed water; and a control unit 100 that monitors and controls the entire system.

Further, a washing toilet seat 9 is set up on a toilet seat of the toilet 2. There is provided: a rainwater storage tank 10 that stores rainwater for use in said washing toilet seat 9; and a pressurization part 11 that pressurizes rainwater-treated water stored in the rainwater storage tank 10 to use this rainwater-treated water for the washing toilet seat 9.

Furthermore, there is provided: a solar panel 12 that converts energy obtained from sunlight into electricity; and a secondary battery 13 that charges the generated electricity.

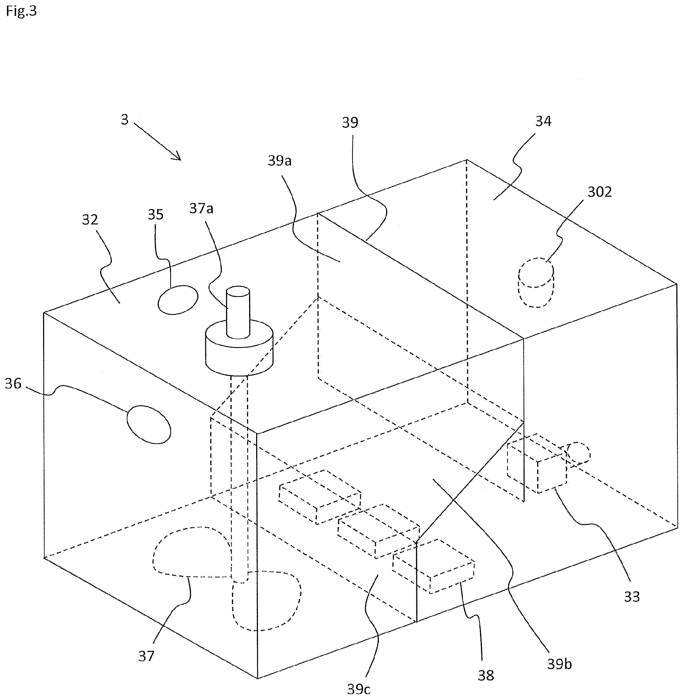

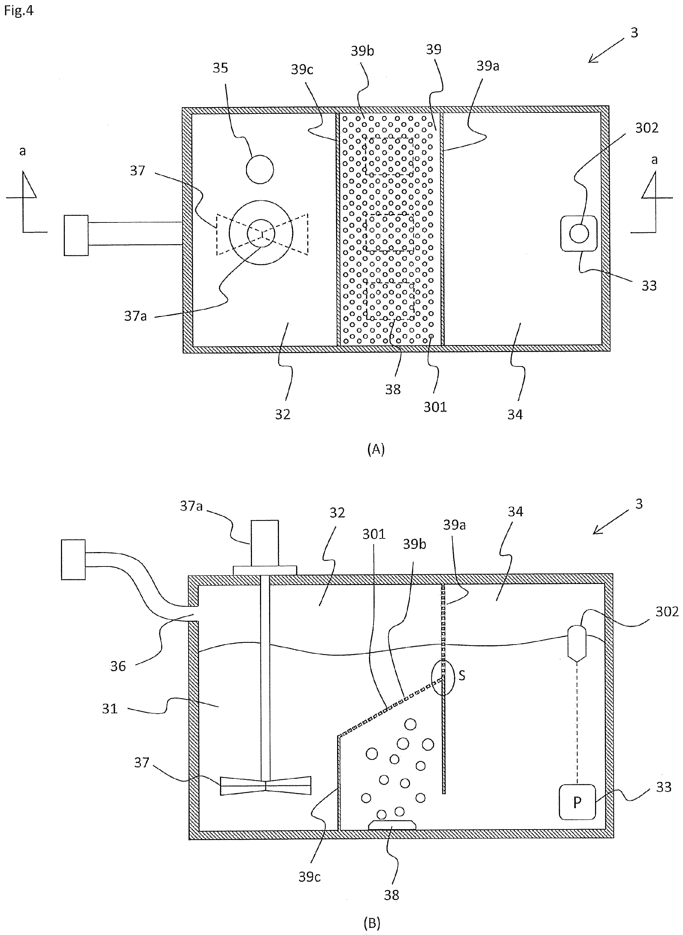

FIG. 3 and FIGs. 4A and 4B are diagrams showing a structure of the raw sewage tank according to the present embodiment. FIG. 3 is an overall perspective view of the raw sewage tank 3, and FIGs. 4A and 4B are a top view and a cross-sectional view of the raw sewage tank 3, respectively (FIG. 4A is the top view of the raw sewage tank 3 and FIG. 4B is the cross-sectional view when viewed from an arrow a in FIG. 4A). There is fed into the raw sewage tank 3 the water to be treated 31 in which washing water having been used for washing in the toilet 2 and filth such as excrement are mixed. The raw sewage tank 3 includes: a feeding area 32 into which said water to be treated 31 is fed; and a sending area 34 from which the water to be treated 31, in which solids contained in the water to be treated 31 is pulverized, is sent out to the next treatment tank by a pump 33. Drive control of the pump 33 at this time is performed by the control unit 100.

In FIG. 3 and FIGs. 4A and 4B, the feeding area 32 is provided with an inflow port 35 into which the water to be treated 31 from the toilet 2 flows. The inflow port 35 is connected to an outlet of the toilet 2 by piping. Further, as will be described later in detail, there is provided an input port 36 into which returned sludge from the second adjustment tank 6 is fed. The solids in the water to be treated 31 that has been fed through the inflow port 35 and the input port 36 is pulverized in the feeding area 32 by the rotation of a stirring blade 37 and aeration by a blower(s) 38 (air diffusion pipes of the blower). The rotation of the stirring blade 37 is performed by drive of a motor 37a, and the drive control of the motor 37a is performed by the control unit 100.

A partition plate 39 that divides the feeding area 32 and the sending area 34 is formed of three flat plate-like portions, and consists of: a first member 39a disposed in a vertical direction to the raw sewage tank 3 from its upper surface to the vicinity of its lower surface; a second member 39b disposed so as to incline downward from the middle position of the first member 39a toward the feeding area 32 side; and a third member 39c disposed in the vertical direction to the raw sewage tank 3 from an end portion of the second member 39b to the lower surface of the raw sewage tank 3. Each of the members is adhered to a side wall surface of the raw sewage tank 3 without any gap, which forms such a structure that the water to be treated 31 does not flow from its side surface portion. In addition, the first member 39a and the third member 39c do not have to be disposed strictly vertically to the raw sewage tank 3 and may be inclined in a horizontal direction to some extent.

Small holes 301 are made in a part of the first member 39a, the part being above a joint position S where the first member 39a is joined to the second member 39b, and the second member 39b. The solids pulverized in the feeding area 32 and the water to be treated 31 are flowed to the sending area 34, but the solids that have not been sufficiently pulverized are caught by the holes 301 and cannot move to the sending area 34 side. That is, the partition plate 39 plays a role of a filter and prevents the solids that have not been sufficiently pulverized from moving to the sending area 34, thereby preventing the pump 33 and the piping from being clogged.

Further, the blower 38 is placed on the sending area 34 side with the second member 39b interposed therebetween, which forms a structure of performing aeration toward the feeding area 32 side through the holes 301 of the second member 39b. By doing so, it is possible to prevent the clogging of the holes 301 by separating large solids caught by the holes 301 from the second member 39b and to perform the pulverization again by diffusing the large solids in the feeding area 32.

The holes 301 are not formed in a part below the joint position S of the first member 39a, so that the aeration of the blower 38 is efficiently transmitted to the feeding area 32 side. In addition, the holes 301 may or may not be formed in the third member 39c.

The pump 33 is driven by the control unit 100. The control unit 100 causes the water to be treated 31 in the raw sewage tank 3 to be pumped up to the first adjustment tank 4 in the subsequent stage as needed when a water level of the first adjustment tank 4 has a margin. When the water level in the first adjustment tank 4 does not have a margin, the pump 33 is not driven and the water to be treated 31 is stored in the sending area 34. A float 302 is provided in the sending area 34. When the water level exceeds a preset water level, the water to be treated 31 is pumped up and sent out regardless of the water level in the first adjustment tank 4.

The water to be treated 31 that has been sent out by the pump 33 from the sending area 34 of the raw sewage tank 3 is stored in the first adjustment tank 4. In the first adjustment tank 4, the water to be treated 31 is stored according to the progress of the treatment in the septic tank 5 of the next stage. Specifically, when the control unit 100 determines that the purification treatment of the septic tank 5 is delayed, that is, the control unit 100 determines that a water level of the second adjustment tank 6 becomes high and an amount of the water to be treated 31 discharged from the septic tank 5 increases, the water to be treated 31 is stored in the first adjustment tank 4 to make the purification treatment of the septic tank 5 at a slow pace. When the control unit 100 determines that the purification treatment of the septic tank 5 is steadily in progress, that is, when the control unit 100 determines that the water level of the second adjustment tank 6 is low and the amount of the water to be treated 31 discharged from the septic tank 5 is not so large, the water to be treated 31 is immediately fed into the septic tank 5 to proceed with the purification treatment of the septic tank 5.

And, the first adjustment tank 4 is provided with a first bacterial bed area 41 that is a bacterial bed of aerobic bacteria. Bacteria activated in the bacterial bed form biofilm on an inner wall of the first adjustment tank 4 and perform aerobic treatment by aeration from a blower 42 (air diffusion pipes of the blower). At the same time, dissolved oxygen in the water to be treated 31 is increased by the aeration from the blower 42 to activate the activity of the bacteria in the subsequent treatment. That is, during the water to be treated 31 being stored in the first adjustment tank 4, it is possible to perform aerobic treatment in advance as pretreatment of the septic tank 5, and it is possible to reduce a burden of the purification treatment of the septic tank 5 in the subsequent stage.

In addition, the water to be treated 31 is sent out from the first adjustment tank 4 to the septic tank 5 by pumping up with a pump 43. The drive control of the pump 43 is performed by the control unit 100 based on a water level of the second adjustment tank 6. Optionally, in the bacterial bed area 41, for example, contact materials on which bacteria are implanted may be charged in a mesh-like bacterial bed bag, and the bacteria activated in there may form the biofilm on the inner wall of the first adjustment tank 4. By doing so, it is possible to prevent the contact materials from being scattered in the tank and, at the same time, to prevent clogging of the piping and the like due to the contact materials.

Further, as shown in FIG. 2, a stirring blade 44 and a motor 45 for rotationally driving the stirring blade 44 may be arranged in an upper portion of the first adjustment tank 4. There is a possibility that solids become deposited in the upper portion of the first adjustment tank 4 (that is, the solids pulverized in the raw sewage tank 3 are floated and deposited), so that, when it is difficult to diffuse the deposited solids only by aeration of the blower 42, driving the stirring blade 44 makes it possible to pulverize the deposited solids again and send them out to the septic tank 5 in the subsequent stage. The drive control of the motor 45 is performed by the control unit 100. Regarding the timing of the driving, for example, the motor 45 may be driven regularly, or the motor 45 may be driven regularly to measure its frictional force and, when the measured frictional force is large, it may be driven fully, estimating that solids are deposited.

Further, the pump 43 may be placed at a position that directly receives aeration of the blower 42. By doing so, it is possible to prevent clogging of the pump 43 by the aeration.

Furthermore, a water quality sensor may be placed in the second adjustment tank 6 (not shown), and the control unit 100 may control driving of the pump 43 of the first adjusting unit 4 based on information from this water quality sensor. That is, it may be controlled such that when water quality of the second adjustment tank 6 is good, the water to be treated 31 is sent out to the septic tank 5, as being determined that the purification treatment is being performed sufficiently, and when the water quality is poor, the water to be treated 31 is stored in the first adjustment tank 4 as much as possible and the purification treatment is made at a slow pace, as being determined that the purification treatment in the septic tank 5 is not being performed sufficiently. Further, at this time, return from the second adjustment tank 6 to the raw sewage tank 3 may be controlled so as to increase the pace, as will be described later in detail. By doing so, it is possible to perform purification treatment again on the water to be treated 31 that has been subjected to insufficient purification treatment to improve the water quality.

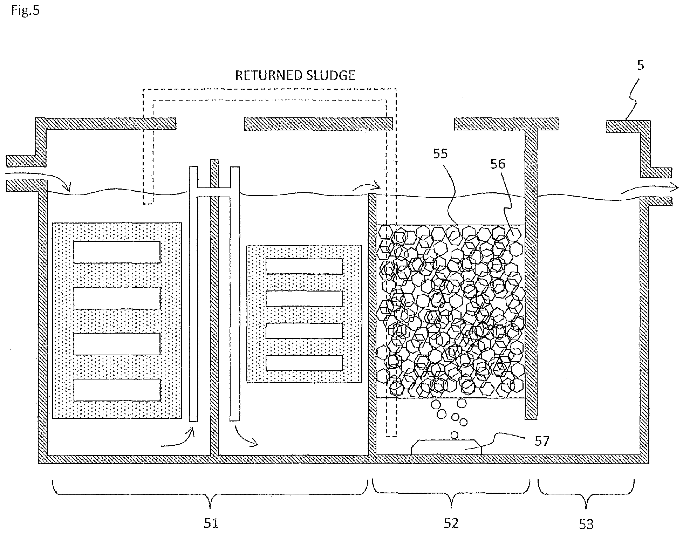

The water to be treated 31 sent out from the first adjustment tank 4 is subjected to full-scale microbial treatment in the septic tank 5. FIG. 5 is a diagram showing a structure of the septic tank in the bio-toilet system according to the present embodiment. The septic tank 5 has: an anaerobic treatment area 51 for performing the first anaerobic treatment; an aerobic treatment area 52 for performing the second aerobic treatment; and a sending area 53 for sending out the water to be treated 31 to the reaction tank 6 in the subsequent stage.

The water to be treated 31 fed from the first adjustment tank 4 is first subjected to the first anaerobic treatment in the anaerobic treatment area 51. This first anaerobic treatment will take some time, so that the anaerobic treatment area 51 is structured to be divided into two sections as shown in FIG. 5 and perform the anaerobic treatment sequentially in respective sections. The respective sections are connected by pipes communicating with each other, and the water to be treated 31 flows between the sections by natural flow-down. The anaerobic treatment area 51 and the aerobic treatment area 52 communicate with each other in such a manner that the water to be treated 31 can flow at upper parts of the respective areas, and the water to be treated 31 that has been subjected to the first anaerobic treatment is sent out through the communication passage to the aerobic treatment area 52. In the aerobic treatment area 52, air is sent from a blower 57 (air diffusion pipes of the blower) to contact materials 56 that are stored in a mesh-like frame body 55 and in which aerobic bacteria are resident, and aerobic treatment is performed. The aerobic treatment area 52 and the sending area 53 communicate with each other at lower parts of the respective areas, and the water to be treated 31 that has been subjected to the aerobic treatment is sent out to the next second adjustment tank 6. The treatment in the septic tank 5 is all performed by natural flow-down without using a pump or the like. Therefore, when the water to be treated 31 is fed in the septic tank 5, the same amount of water to be treated is sent out to the second adjustment tank 6 at the same time.

Further, a part of the water to be treated 31 that has been subjected to the aerobic treatment in the aerobic treatment area 52 is returned to the anaerobic treatment area 51 through a pipe using a pump or aeration in order to perform sufficient microbial treatment again, and is repeatedly treated such that the water to be treated 31 becomes more clean. In addition, the drive control of the blower 57 or the pump is performed by the control unit 100.

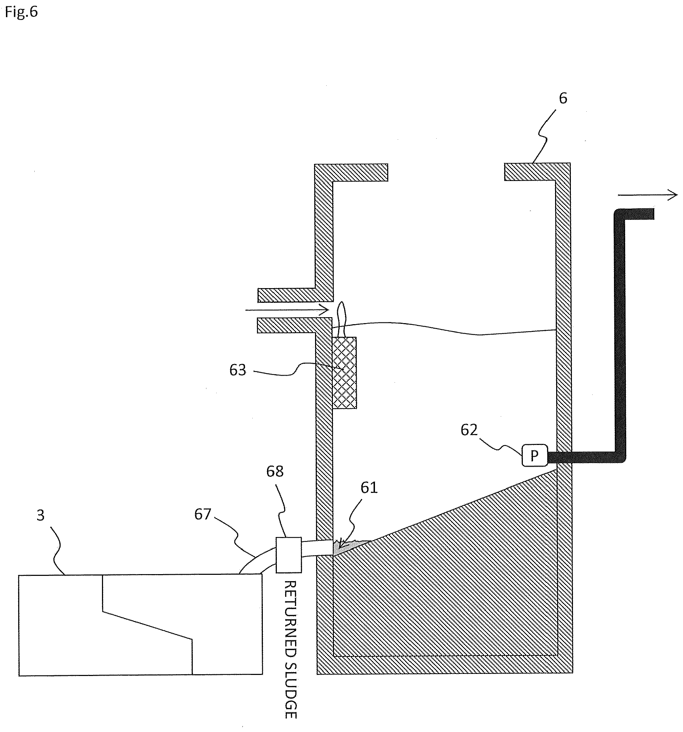

The water to be treated 31 that has been treated in the septic tank 5 is stored in the second adjustment tank 6. FIG. 6 is a diagram showing a structure of the second adjustment tank in the bio-toilet system according to the present embodiment. The second adjustment tank 6 stores the water to be treated 31 and sends it out to the reaction tank 7 of the next stage according to the remaining amount of washing water described below and the progress of the treatment in the septic tank 5, which is a determination of the control unit 100, the determination being made by the control unit 100 that determines the progress of the treatment based on, for example, a water level of the second adjustment tank 6, a water level of a parking area 73 in the reaction tank 7 described later, and, if needed, a water level of the washing tank 8. That is, when the water level of the washing tank 8 or the parking area 73 of the reaction tank 7 is lowered, it is determined that the washing water tends to be insufficient, and the water to be treated 31 is sent out to the reaction tank 7. When the water level of the washing tank 8 or the parking area 73 of the reaction tank 7 is raised, it is determined that the washing water is sufficiently ensured, and the water to be treated 31 is stored in the second adjustment tank 6. When the water level of the second adjustment tank 6 is also raised, the water to be treated 31 is stored in the first adjustment tank 4 to adjust the progress of the treatment, as described above. In addition, the water to be treated 31 is sent out from the second adjustment tank 6 to the reaction tank 7 by a pump 62, and the drive control of the pump 62 is performed based on the determination of the control unit 100 as described above.

When the water to be treated 31 is sent out to the second adjustment tank 6 in a state where the purification treatment in the septic tank 5 is insufficient, sludge may be precipitated at a lower part of the second adjustment tank 6. Therefore, it is so structured that a bottom portion of the second adjustment tank 6 in which the water to be treated 31 is stored is inclined such that sludge is precipitated at a tip portion 61 of the inclined bottom portion, as shown in FIG. 6. The tip portion 61 of said incline has a height corresponding to a position of the upper surface of the raw sewage tank 3, which forms such a structure that the precipitated sludge is extracted and returned to the raw sewage tank 3. Specifically, the tip portion 61 and the upper surface portion of the raw sewage tank 5 are connected by a piping 67, and a solenoid valve 68 is installed on the piping 67. The solenoid valve 68 is structured to be opened on a regular or irregular basis by the control of the control unit 100. When the solenoid valve 68 is opened, it is possible to extract the sludge accumulated on the tip portion 61 to return the extracted sludge to the raw sewage tank 3. The raw sewage tank 3 and the second adjustment tank 6 are arranged adjacent to each other, and, by minimizing the length of the piping 67, it is possible to easily return the sludge precipitated in the second adjustment tank 6 to the raw sewage tank 3 and to reduce maintenance work.

In addition, the second adjustment tank 6 may be also provided with a bacterial bed area 63 similar to that in the first adjustment tank 4 such that the bacteria activated in there form biofilm on an inner wall of the second adjustment tank 6. By doing so, it is possible to perform the anaerobic treatment again on the water to be treated 31 stored in the second adjustment tank 6, and it is also possible to prevent contact materials from being scattered in the tank and, at the same time, to prevent clogging of the piping and the like due to the contact materials.

Further, as described above, the water quality sensor may be placed in the second adjustment tank 6 (not shown), and the pace of return to the raw sewage tank 3 may be controlled based on the information from the water quality sensor. That is, when the water quality is poor, the pace of return (or the amount of return) to the raw sewage tank 3 may be increased, and when the water quality is good, the pace of return (or the amount of return) to the raw sewage tank 3 is decreased.

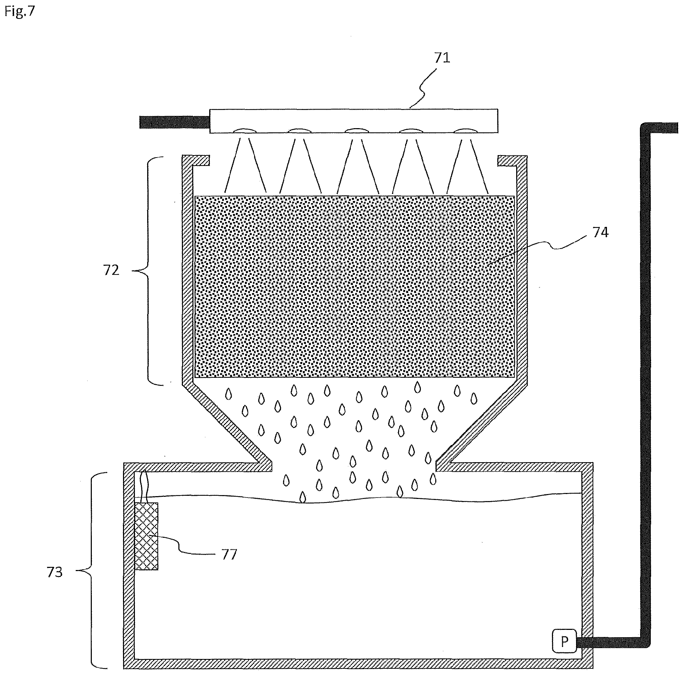

The water to be treated 31 sent out from the second adjustment tank 6 is fed into the reaction tank 7. FIG. 7 is a diagram showing a structure of the reaction tank in the bio-toilet system according to the present embodiment. When the water to be treated 31 is fed into the reaction tank 7, it is sprayed from a spraying part 71 placed above the reaction tank 7 and is fed thereinto. The reaction tank 7 has: a decomposition area 72 (upper area) for decomposing organic substances contained in the water to be treated 31 into carbon dioxide and water for removal; and a parking area 73 (lower area) for storing the water to be treated 31 from which the organic substances have been removed. The decomposition area 72 is filled with biochips 74 (for example, cedar chips or the like) on which bacteria that decompose organic substances into carbon dioxide and water are implanted. The water to be treated 31 sprayed from the spraying part 71 has organic substances removed while passing through these biochips 74. The water to be treated 31 that has passed through the biochips 74 is stored in the parking area 73 arranged below the decomposition area 72.

The water to be treated 31 stored in the parking area 73 has been purified to a level at which it can be used as washing water. However, since the water to be treated 31 stored in the parking area 73 passes through the decomposition area 72 while being in contact with the biochips 74, it will be colored brown. Even though the purification level is sufficient, it is not comfortable for a user when brown water comes out as washing water. Therefore, in order to remove this brown coloring, a coloring removal filter 75 is used. Further, at the same time, in order to prevent leakage of bacteria into the washing tank 8 of the next stage, a bacteria removal filter 76 is used.

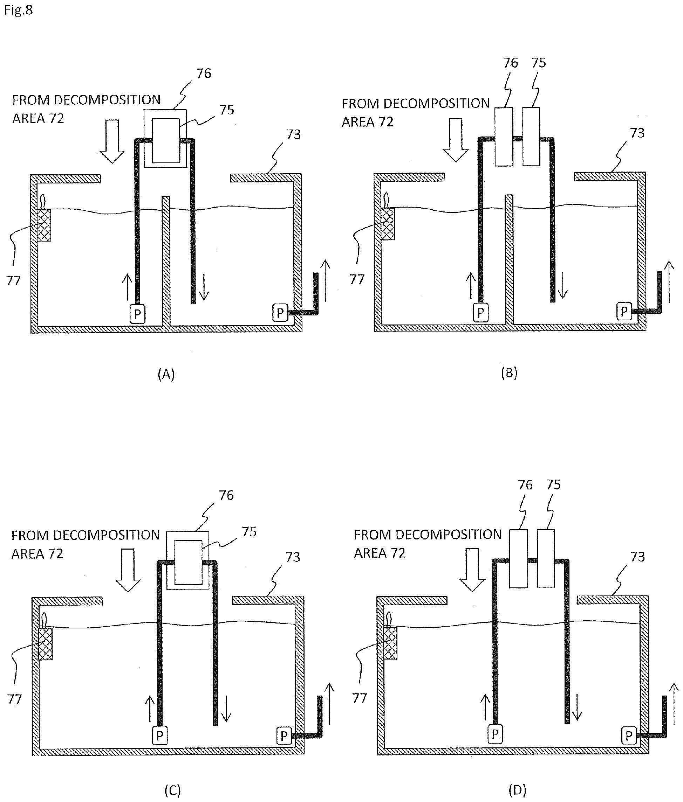

FIGs. 8A to 8D are diagrams showing structures of the parking area of the reaction tank in the bio-toilet system according to the present embodiment. FIG. 8A shows a structure in which the parking area is divided into two areas before and after the filtering and the filtering is performed by one filter; FIG. 8B shows a structure in which the parking area is divided into two areas before and after the filtering and the filtering is performed by two filters; FIG. 8C show a structure in which the parking area is not divided before and after the filtering and the filtering is performed by one filter; and FIG. 8D shows a structure in which the parking area is not divided before and after the filtering and the filtering is performed by two filters. As described above, the purpose here is to remove the brown coloring and the bacteria, and it is efficient to use the coloring removal filter 75 with a reverse osmosis membrane with respect to the brown coloring and to use the bacteria removal filter 76 with a hollow fiber with respect to the bacteria.

In the case of FIG. 8A, the coloring removal filter 75 and the bacteria removal filter 76 are integrated, and only the water to be treated 31 that has been subjected to the filtering is sent out to the washing tank 8. In this case, since the function is realized by one filter, the configuration can be simplified, but the filter may be easily clogged. Further, since only the filtered water to be treated 31 is sent out to the washing tank 8, it is necessary to stop the entire bio-toilet system 1 when the filter is replaced or the filter is clogged, for example. In the case of FIG. 8B, since the bacteria are removed by the bacteria removal filter 76 first and then the water to be treated 31 is passed through the coloring removal filter 75, the bacteria with a larger size are removed first and then the coloring is removed, which makes it possible to suppress the clogging of the filters. However, also in this case, it is necessary to stop the entire bio-toilet system 1 when the filters are replaced or when the filters are clogged, for example.

In the case of FIG. 8C, the coloring removal filter 75 and the bacteria removal filter 76 are integrated, and the water to be treated 31 is sent out to the washing tank 8 regardless of whether before and after the filtering. In this case, since the function is realized by one filter, the configuration can be simplified, but the filter may be easily clogged, as in the case of FIG. 8A. On the other hand, since the water to be treated 31 is sent out to the washing tank 8 regardless of whether before and after the filtering, it is not necessary to stop the entire bio-toilet system 1 even when the filter is replaced or the filter is clogged, for example. In the case of FIG. 8D, since the bacteria are removed by the bacteria removal filter 76 first and then the water to be treated 31 is passed through the coloring removal filter 75, the bacteria with a larger size are removed first and then the coloring is removed, which makes it possible to suppress the clogging of the filters. Further, it is not necessary to stop the entire bio-toilet system 1 even when the filters are replaced or the filters are clogged, for example.

In addition, the parking area 73 may be also provided with a bacterial bed area 77 similar to those in the first adjustment tank 4 and the second adjustment tank 6 such that the bacteria activated in there form biofilm on an inner wall of the parking area 73. By doing so, it is possible to perform the anaerobic treatment again on the water to be treated 31 stored in the parking area 73.

By performing the filtering as shown in FIGs. 8A to 8D, it is possible to produce transparentized clean water to be treated 31 (which has become water to be treated to be reused for washing at this point). The transparentized water to be treated 31 is pumped up and sent out from the parking area 73 to the washing tank 8 under the control of the control unit 100. When the toilet 2 is flushed after being used, the water to be treated in the washing tank 8 is sent out by a pump 81, whereby the toilet 2 is washed, and is circulated in the system again.

It is possible to circulate the washing water by the series of treatment described above. In the present embodiment, electric power generated by the solar panel 12 is used as electric power for pumping up and driving the control unit 100 that are required in the respective treatments. The electric power generated by the solar panel 12 is stored in the secondary battery 13, and the treatments are performed while the respective pumps and the control unit 100 consume the electric power as needed. The solar panel 12 may be installed on a roof, or its sheet type may be attached to a side wall(s) of the bio-toilet system 1.

Further, in the present embodiment, a user can use the washing toilet seat 9 after using the toilet 2. Rainwater stored in the rainwater storage tank 10 is used as water for the washing toilet seat 9. The rainwater storage tank 10 performs sterilization and disinfection by a chemical such as chlorine or a photocatalyst, for example, and ensures purified water of a level that does not cause any problem even if it comes into contact with a body as rainwater-treated water. When using the washing toilet seat 9, it is necessary to eject the rainwater-treated water for washing with a predetermined force, so that pressurization is performed by the pressurization part 11. All of these controls are performed by the control unit 100, and necessary electric power is supplemented with the electric power stored in the secondary battery 13.

When the rainwater-treated water is used in the washing toilet seat 9, the amount of water flowing in the toilet 2 increases accordingly. Further, since water is added also by urination or the like, the total amount of water in the bio-toilet system 1 may increase to such an extent that it affects the purification treatment. Therefore, the present embodiment has a function of efficiently discharging the increased water to the outside of the bio-toilet system 1.

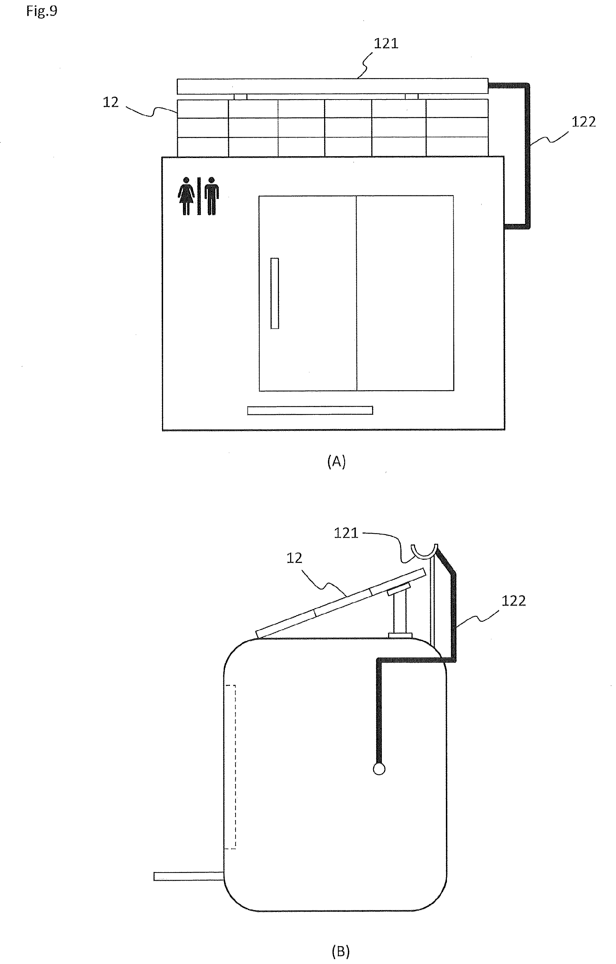

FIGs. 9A and 9B are diagrams showing an example of a mechanism that discharges the increased water in the system in the bio-toilet system according to the present embodiment. FIG. 9A is a front view of the bio-toilet system, and FIG. 9B is a side view of the bio-toilet system. In FIGs. 9A and 9B, the increased water is released to the solar panel 12 after being purified to a level at which it can be reused as the treated water of the washing tank 8. For example, a rain gutter 121 with small holes is provided at an upper end (upper side portion) of the solar panel 12, and the treated water is pumped up, through a pipe 122 from the room inside of the bio-toilet system, to carry it to the gutter 121, where the treated water is released to a surface of the solar panel 12, as shown in FIGs. 9A and 9B. The surface of the solar panel 12 is cooled by this treated water and its temperature is lowered, so that it is possible to remarkably improve efficiency of electric power generation particularly in summer. Further, at the same time, the surface of the solar panel 12 is washed, and power generation efficiency can be increased.

In addition, the same applies to a case where the solar panel 12 is attached to the side wall(s) of the bio-toilet system 1. By releasing the treated water from the upper end of the solar panel 12 (the upper side portion of the solar panel 12) to the surface of the solar panel 12, the temperature of the solar panel 12 can be lowered and the power generation efficiency can be increased.

The release of the treated water to the solar panel 12 as shown in FIGs. 9A and 9B is extremely effective when the power generation efficiency is lowered due to the temperature rise of the solar panel 12 particularly in summer, but it is not so advantageous in the winter. Further, the released treated water may be cooled to ice by an outside air temperature, which may deteriorate the solar panel 12, depending on some environments. In such a case, by sending an airflow of air into each treatment tank, it is possible to bring the gas flow into contact with water to evaporate the water. For example, in the raw sewage tank 3, the first adjustment tank 4, the aerobic treatment area 52 and the like, which are subjected to the aeration by using the blowers, it is possible to evaporate water and reduce the water even only by opening their upper portions.

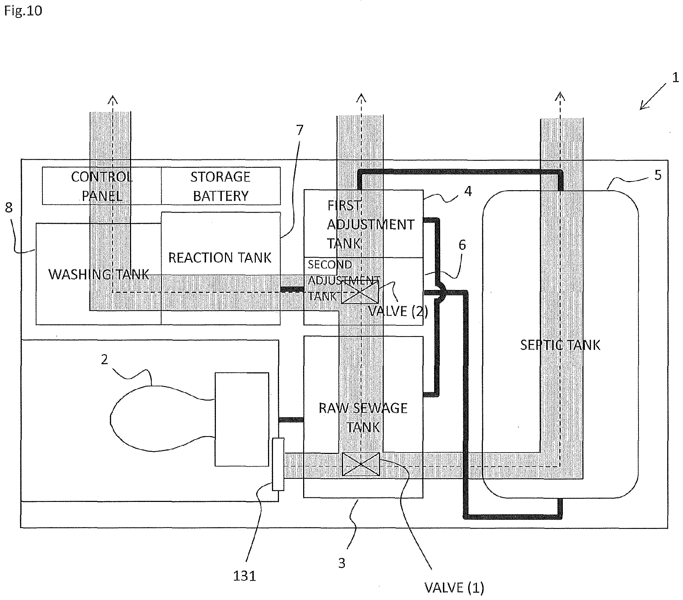

Further, in order to evaporate the water more efficiently, airflow generated by a ventilation fan installed in the toilet 2 may be used. It is possible to promote the evaporation of the water even only by passing the airflow generated by the ventilation fan through each tank. FIG. 10 is a diagram showing a configuration when utilizing the airflow of the ventilation fan to discharge increased water in the system in the bio-toilet system according to the present embodiment. FIG. 10 is a top view showing an internal structure of the bio-toilet system and shows a direction of the airflow from the ventilation fan 131.

In FIG. 10, a colored portion is a path through which the airflow flows, and the airflow can flow in a state where it can contact with the water to be treated 31 and the treated water which are stored in the respective tanks. The airflow has a plurality of directions (indicated by dashed arrows in FIG. 10), and its route can be changed according to the amount of water in the bio-toilet system 1. That is, when the amount of water in the bio-toilet system 1 is extremely increased and it is necessary to evaporate a large amount of water, the airflow route is controlled by a valve (1) and/or a valve (2) such that the airflow flows through as many tanks as possible. When it is not necessary to evaporate water so much, the airflow route is controlled by the valve (1) and/or the valve (2) such that the airflow flows through only a minimum number of tanks. The control of the valve (1) and/or the valve (2) is performed by the control unit 100.

In addition, water obtained by sterilizing and disinfecting the treated water stored in the washing tank 8 may be used as the water to be used for the washing toilet seat 9.

### (Second Embodiment of the Present Invention)

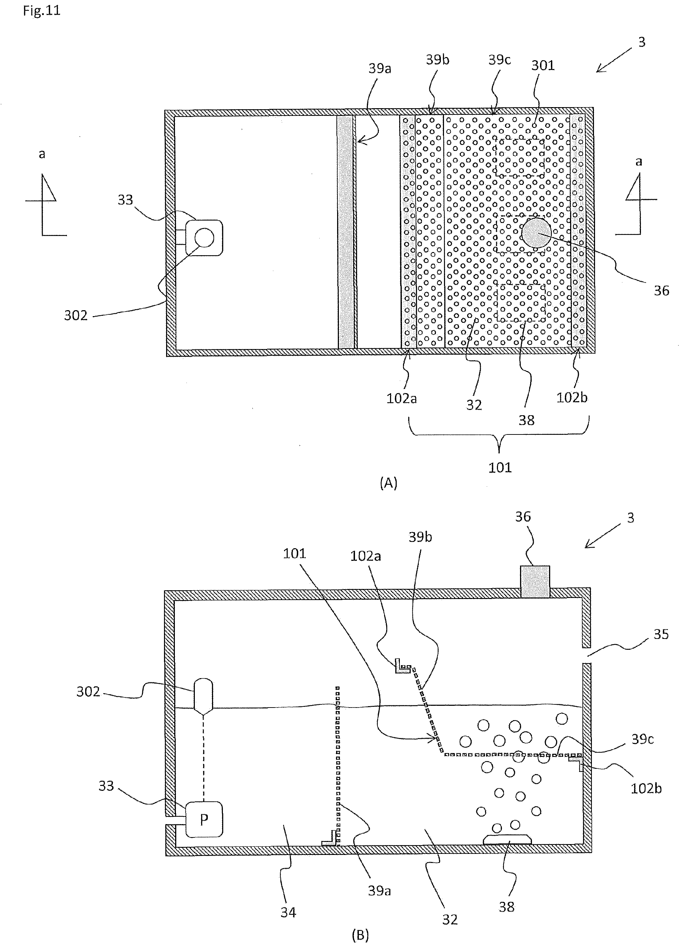

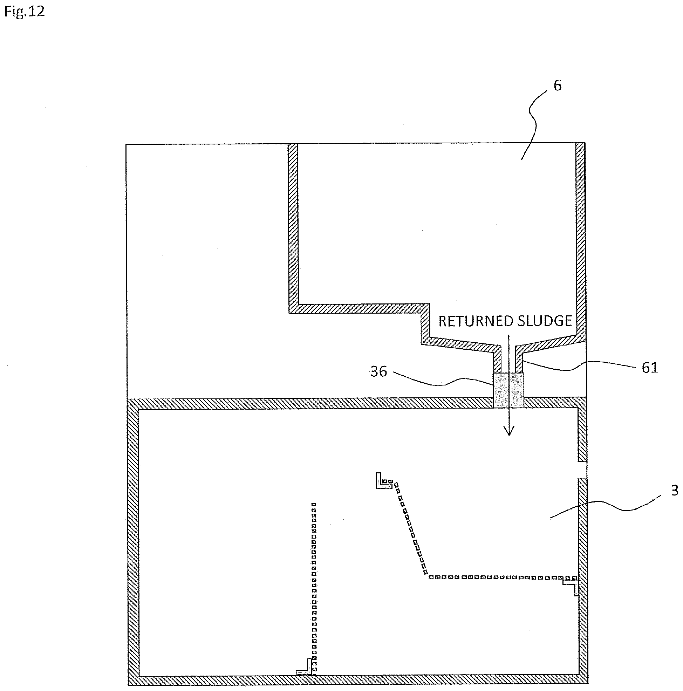

A purification system according to the present embodiment will be described with reference to FIGs. 11 and 12. Also in the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet, as is the case with the first embodiment. In addition, the description that overlaps with the first embodiment will be omitted in the present embodiment.

FIGs. 11A and 11B are diagrams showing a structure of a raw sewage tank in the bio-toilet system according to the present embodiment. FIG. 11A is a top view of the raw sewage tank 3, and FIG. 11B is a cross-sectional view when viewed from an arrow a in FIG. 11A. In FIGs. 11A and 11B, the stirring blade 37 as in the case of FIG. 3 and FIGs. 4A and 4B is not provided, and it is so configured that the solids in the water to be treated 31 is treated only by aeration by the blower 38.

In FIG. 11, the raw sewage tank 3 includes: a feeding area 32 into which the water to be treated 31 is fed; and a sending area 34 from which the water to be treated 31, in which solids contained in the water to be treated 31 is pulverized, is sent out to the next treatment tank by a pump 33. The feeding area 32 and the sending area 34 are separated by a first member 39a having small holes 301. The feeding area 32 is provided with an inflow port 35 into which the water to be treated 31 from the toilet 2 flows. The inflow port 35 is connected to the outlet of the toilet 2 by piping. Further, as will be described in FIG. 11 in detail, there is provided an input port 36 into which the returned sludge from the second adjustment tank 6 is fed.

The solids in the water to be treated 31 that has been fed through the inflow port 35 and the input port 36 settle in a sludge receiving part 101, which is provided in the feeding area 32 and consists of a second member 39b and a third member 39c, and are pulverized here by aeration by the blower 38. The sludge receiving part 101 consists of: the second member 39b that is disposed to be inclined with respect to a vertical direction of the raw sewage tank 3; and the third member 39c that is connected to the second member 39b and is horizontally arranged in the raw sewage tank 3. Small hole 301 are made in each of the members 39b and 39c. The solids pulverized in the feeding area 32 and the water to be treated 31 are flowed to the sending area 34 through the sludge receiving part 101 and the holes 301 of the first member 39a, but the solids that have not been sufficiently pulverized are caught by the holes 301 and cannot move to the sending area 34 side.

The second member 39b and the third member 39c are locked by locking parts 102a and 102b fixed to an inner wall surface of the tank 3. The locking part 102a is placed at a position higher than the locking part 102b, which forms such a structure that it is possible to collect sludge in a horizontal portion of the third member 39c by utilizing the inclination of the second member 39b and perform aeration efficiently.

Further, the locking part 102a is placed at a position higher than the first member 39a and on the feeding area 32 side. By doing so, even if a large amount of the water to be treated 31 is fed, sludge that has overflowed from the sludge receiving part 101 is not directly fed into the sending area 34 but overflows to the feeding area 32 side, so that it is possible to prevent clogging of the pump 33 and the like on the sending area 34 side.

In addition, a water level of the raw sewage tank 3 is measured by a float 302 and is adjusted so as not to exceed the height of the first member 39a.

FIG. 12 is a diagram showing a structure of a second adjustment tank in the bio-toilet system according to the present embodiment. The difference from the case of FIG. 6 is that the raw sewage tank 3 is arranged below the second adjustment tank 6 and these tanks are integrally formed, which forms such a structure that sludge discharged from the tip portion 61 of the second adjustment tank 6 is directly fed into the raw sewage tank 3 arranged below the second adjustment tank 6. The sludge returned from the tip portion 61 may be returned to the raw sewage tank 3 through a pipe or the like between the outlet of the tip portion 61 and the input port 36 of the raw sewage tank 3, or may be returned to the raw sewage tank 3 by directly connecting the outlet of the tip portion 61 and the input port 36 of the raw sewage tank 3.

In addition, FIG. 12 shows such a configuration that the raw sewage tank 3 of FIG. 11 is arranged below the second adjustment tank 6; however, if the drive mechanism of the stirring blade 37 is eliminated in the raw sewage tank 3 of FIG. 3 and FIGs. 4A and 4B, the raw sewage tank 3 of FIG. 3 and FIGs. 4A and 4B can be formed integrally with the second adjustment tank 6.

In this way, by integrally forming the raw sewage tank 3 and the second adjustment tank 6, space-saving can be realized, enabling the bio-toilet system to be made compact and the number of toilets to be increased.

### (Third Embodiment of the Present Invention)

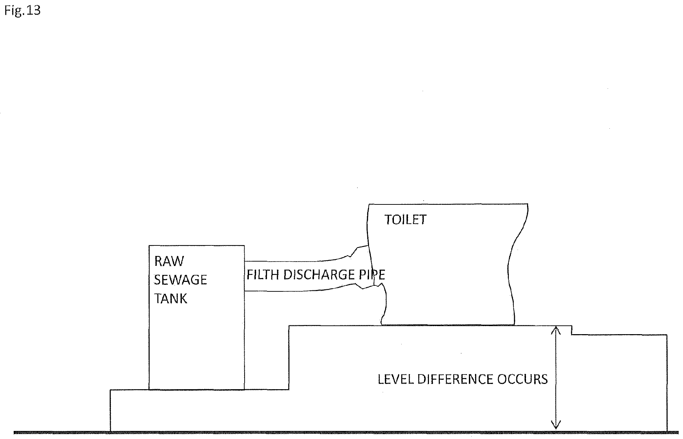

A purification system according to the present embodiment will be described with reference to FIGs. 13 to 17. Also in the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet, as is the case with each embodiment mentioned above. In addition, the description that overlaps with each embodiment mentioned above will be omitted in the present embodiment.

In a bio-toilet system, there is a demand for a barrier-free technology similar to general toilets. If it is a general toilet, a sewage treatment facility can be utilized to send out filth or the like discharged from a toilet bowl to a septic tank along a piping under the floor. However, in a case of a mobile temporary toilet that does not require such a sewage treatment facility, it is necessary to raise the position of a toilet bowl to some extent and then send out filth or the like to a treatment tank installed on the floor. That is, the position of the toilet bowl becomes higher, generating a level difference, and making it extremely difficult to achieve barrier-free (see FIG. 13).

Therefore, the present embodiment provides a bio-toilet system that can send out filth or the like discharged from a toilet bowl to a raw sewage tank of the next stage without raising the position of that toilet bowl, and can perform sufficient pulverization of solids and the like in the raw sewage tank.

As described above, filth flushed from a toilet bowl is in general discharged to a sewage treatment system through a filth discharge piping installed below the toilet bowl. In a case of a simple toilet and a mobile toilet that do not require a sewage treatment system, it is necessary to raise a toilet 2 from a floor surface to gain a height for discharging filth, as shown in FIG. 13. If this happens, it will be very inconvenient for elderly people with weak legs and people with wheelchairs to use it, and it will not be possible to realize barrier-free.

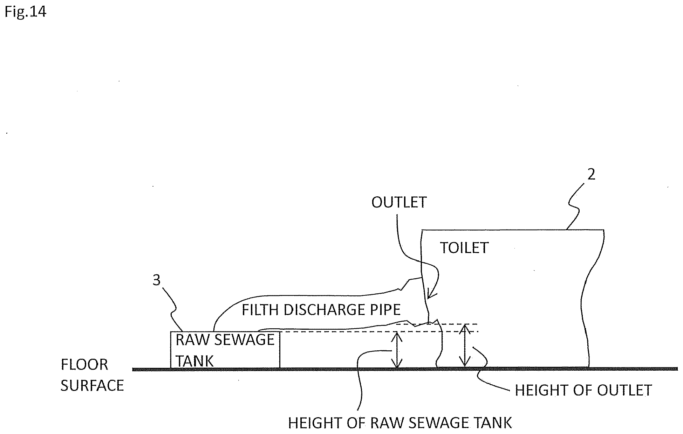

In the present embodiment, the height of a raw sewage tank 3 that receives filth flushed from a toilet 2 is set between a floor surface where the toilet 2 is installed and an outlet where the filth is discharged, as shown in FIG. 14. In this case, the height of the raw sewage tank 3 will be much lower than that of a conventionally known bio-toilet system. However, in the present embodiment, even a raw sewage tank having a low height has a function of reliably pulverizing solids to reduce pressure on the subsequent treatment.

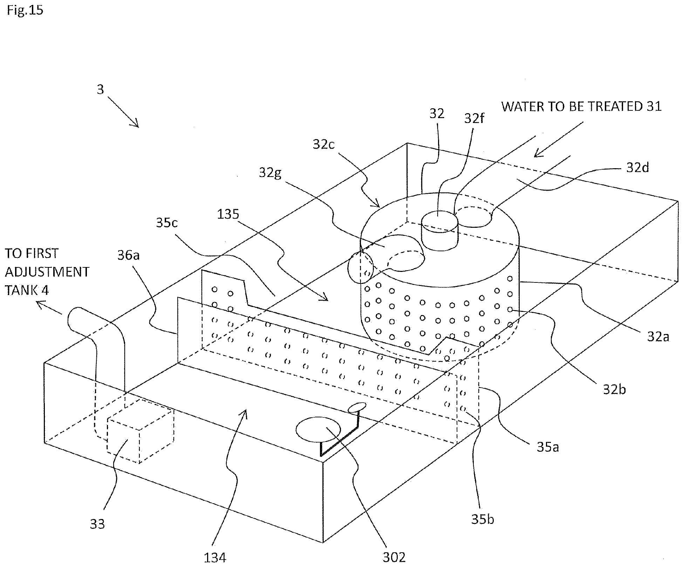

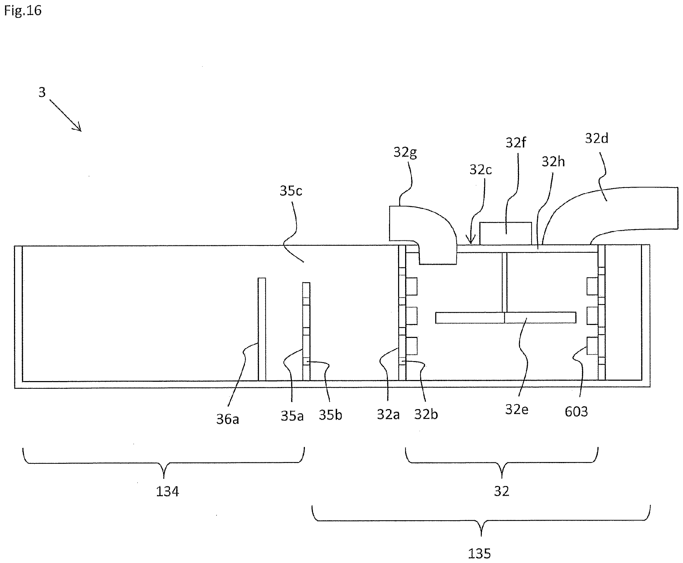

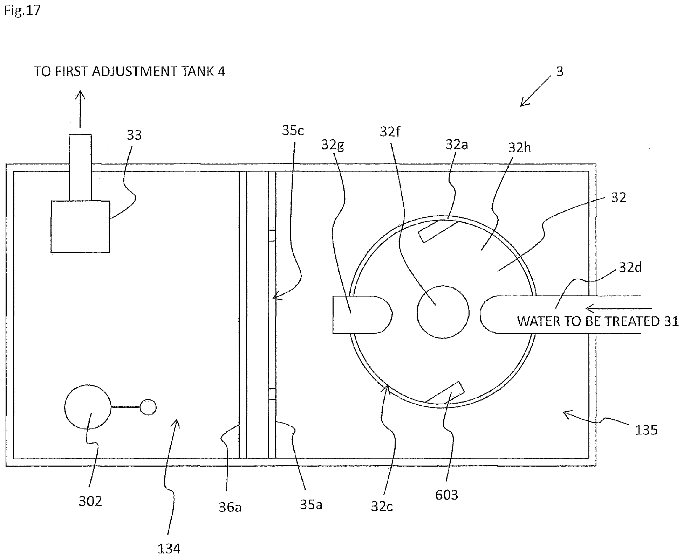

FIG. 15 is a perspective view showing a structure of the raw sewage tank in the bio-toilet system according to the present embodiment; FIG. 16 is a side cross-sectional view of the raw sewage tank in the bio-toilet system according to the present embodiment; and FIG. 17 is a top view of the raw sewage tank in the bio-toilet system according to the present embodiment. Water to be treated 31 in which washing water having been used for washing in the toilet 2 and filth such as excrement are mixed is first fed into the raw sewage tank 3 shown in FIGs. 15, 16, and 17. The height of the raw sewage tank 3 is equal to or lower than the height from the floor surface where the toilet 2 is installed to a lowermost end portion of the outlet of the toilet 2.

The raw sewage tank 3 has: a feeding area 32 into which the water to be treated 31 is fed; a first area 135 including the feeding area 32; and a second area 134 in which the water to be treated 31 in which solids have been pulverized is sent out to the next tank. The feeding area 32 is separated from the other areas by a feeding area partition plate 32a, and the first area 135 and the second area 134 are partitioned by a first raw sewage tank partition plate 35a and a second raw sewage tank partition plate 36a. The first raw sewage tank partition plate 35a is placed to prevent large solids from flowing into the second area 134, and the second raw sewage tank partition plate 36a is placed to keep a water level of the first area 135 at a predetermined height. A stirring blade 32e that rotates about a vertical direction of the raw sewage tank 3 is arranged in the feeding area 32. By the rotation of the stirring blade 32e powered with a motor 32f arranged above the feeding area 32, the solids contained in the water to be treated 31 in the feeding area 32 is pulverized, and the water to be treated 31 in the feeding area 32 is stirred by the rotation of the stirring blade 32e to pulverize the solids.

Small holes 32b are made in the feeding area partition plate 32a. The solids pulverized by the rotation of the stirring blade 32e and the water to be treated 31 are flowed into the other area of the first area 135 which is outside the feeding area 32 through the holes 32b. At this time, the solids that have not been sufficiently pulverized by the stirring blade 32e are caught by the holes 32b and cannot flow out of the feeding area 32. That is, the feeding area partition plate 32a plays a role of a filter and prevents the solids that have not been sufficiently pulverized from moving to the outside of the feeding area 32, thereby preventing the pump 33 and the piping from being clogged.

Pulverization portions 603 each having a protruding shape are formed on an inner side surface of the feeding area partition plate 32a. The pulverization portions 603 promote pulverization of the solids contained in the water to be treated 31 by the solids being flowed by running water that occurs with the rotation of the stirring blade 32e and colliding with the pulverization portions 603. The pulverization portions 603 are formed in a protruding shape from the inner side surface of the feeding area partition plate 32a and, at the same time, are arranged to be inclined in a direction of stirring the water to be treated 31 (in the case of FIGs. 15 to 17, it is provisionally assumed to be a counterclockwise direction), as shown in FIGs. 16 and 17. By forming such pulverization portions 603, it is possible to improve pulverization efficiency of the solids and, at the same time, to constantly move the solids without being caught by the pulverization portions 603, preventing the solids from being stopped at a certain position and clumping together, thereby making it possible to significantly reduce maintenance work.

In addition, the pulverization portions 603 are not limited to be formed on the inner side surface of the feeding area partition plate 32a, and they may be formed in a protruding shape inward from an inner surface of the feeding area 32. For example, they may be formed in a protruding shape inward from an inner side of an upper surface or an inner side of a lower surface of the feeding area 32, or any combination thereof.

On the upper surface 32c of the feeding area 32, there is provided: a piping 32d that also communicates with the outlet of the toilet 2; a motor 32f that drives the stirring blade 32e; and a piping 32g for sending out, when the water to be treated 31 overflows in the feeding area 32, the water to be treated 31 that has overflowed, into the other area of the first area 135 which is outside the feeding area 32. An area other than the piping 32d and the piping 32g on the upper surface 32c is closed by a lid 32h. By closing the upper surface 32c with the lid 32h, it is possible to prevent the solids pulverized by the rotation of the stirring blade 32e and the water to be treated 31 from scattering to the outside. Further, even when the holes 32b of the feeding area partition plate 32a are clogged and the water to be treated 31 were to overflow in the feeding area 32, the solids and the water to be treated 31 are discharged outside the feeding area 32 by the piping 32g, thereby making it possible to prevent the system from being stopped or the like due to the overflow.

In addition, the solids that has overflowed from the feeding area 32 may not be sufficiently pulverized by the stirring blades 32e, but the first raw sewage tank partition plate 35a is placed between the first area 135 and the second area 134, and holes 35b are made in the first raw sewage tank partition plate 35a, so that large solids (solids having diameters larger than those of the holes 35b) will not flow to the second area 134 and do not cause clogging of a pump 33 and piping that are placed in the second area 134.

Further, even if the solids sent out through the piping 32g into the other area of the first area 135 which is outside the feeding area 32 are large, the inside of the first area 135 constantly flows by the stirring blade 32e, so that although it takes some time, said solids will be pulverized before too long to move to the second area 134 through the holes 35b, then making it possible to perform biological treatment in the next stage treatment.

A release section 35c that is larger than the holes 35b and connects a space of the first area 135 with a space of the second area 134 is formed at an upper portion of the first raw sewage tank partition plate 35a disposed between the first area 135 and the second area 134. The release section 35c enables the solids and the water to be treated 31 to flow from the first area 135 to the second area 134 even if the holes 35b were to be blocked and clogged, so that it is possible to prevent the overflow of the raw sewage tank 3.

Of the water to be treated 31 stored in the first area 135, the water to be treated 31 that has overflowed the second raw sewage tank partition plate 36a is fed into the second area 134. The water 31 to be treated that is fed into the second area 134 is in a state where the solids have been pulverized and the biological treatment of the subsequent stages can be efficiently performed. The water to be treated 31 in the second area 134 is sent out to the first adjustment tank 4 of the next stage by a pump 33. The pump 33 is driven by a controller 1011 of the control unit 100. The control unit 100 causes the water to be treated 31 in the raw sewage tank 3 to be pumped up to the first adjustment tank 4 in the subsequent stage as needed when a water level of the first adjustment tank 4 has a margin. When the water level in the first adjustment tank 4 does not have a margin, the pump 33 is not driven and the water to be treated 31 is stored in the second area 134. A float 302 is provided in the sending area 34. When the water level exceeds a preset water level, the water to be treated 31 is pumped up and sent out regardless of the water level in the first adjustment tank 4.

In addition, as a water level sensor, a capacitance type sensor may be used, for example. A water level may be detected by installing a capacitance sensor at any position of an outer side surface of the raw sewage tank 3 and measuring capacitance inward and then determining whether the water to be treated 31 is present or not at that height. Further, since the measurement of a water level affects the performance of the treatment of the subsequent stage, it is desirable to be measured more accurately. Therefore, the float 302 and another water level sensor may be used in combination to increase the sensitivity.

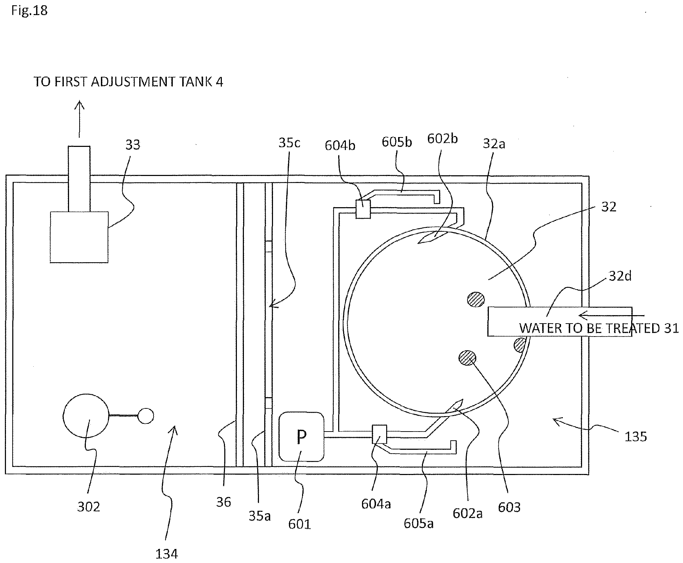

Further, a raw sewage tank 3 shown in FIG. 18 is a further improvement of the raw sewage tank 3 shown in FIGs. 15 to 17, wherein, as stirring means, the inside of the feeding area 32 is stirred by water flow generated when the water to be treated 31 stored outside the feeding area 32 in the raw sewage tank 3 is returned to the inside of the feeding area 32.

FIG. 18 is a top view of a second raw sewage tank in the bio-toilet system according to the present embodiment. In the raw sewage tank 3 shown in FIGs. 15 to 17, the stirring blade 32e and the motor 32f for rotating the stirring blade 32e are provided as stirring means. However, in the present embodiment, a circulation pump 601 disposed outside the feeding area 32 sucks the water to be treated 31 that is present outside the feeding area 32 and, at the same time, discharges the sucked water to be treated 31 into the feeding area 32. At this time, the water to be treated 31 sucked by the circulation pump 601 is ejected from ejection parts 602a and 602b that are penetrated into the feeding area 32 and whose tip portions each has the cross-sectional area that is gradually reduced toward its tip, whereby running water is generated in the feeding area 32.

In particular, it is possible to generate the flowing water in a fixed direction by inclining the ejection parts 602a and 602b along the same lateral direction from the radial direction of the feeding area 32. In the case of FIG. 18, running water that rotates counterclockwise when viewed from above is generated. This running water stirs the inside of the feeding area 32, so that it is possible to pulverize the solids.

Further, pulverization portions 603 each having a protruding shape are formed in the feeding area 32 at positions that can be a flow passage for solids. The solids flowing along with the flow generated in the feeding area 32 collide with the pulverization portions 603, whereby the pulverization is promoted. At this time, the pulverization portions 603 can more effectively collide with and pulverize the solids by being arranged in a zigzag shape along the flow passage as shown in FIG. 18, for example.

In addition, the shape of the pulverization portions 603 is not limited to the cylindrical shape as shown in FIG. 18, and may be, for example, a conical shape, a polygonal prism shape, a spherical shape, an uneven shape, or the like. The arrangement configuration of the pulverization portions 603 also may be an arrangement made in various ways such as being parallel, straight, vertical, random, and so on, other than zigzag. Further, the number of ejection parts 602a and 602b is not limited to two as shown in FIG. 18, but it may be one or more. Furthermore, the flow velocity is high in the vicinity of ejection ports of the ejection parts 602a and 602b due to discharge pressure, so that the size and shape of the pulverization portions 603 may be gradually changed according to the distance from the ejection ports. For example, small pulverization portions 603 may be arranged in the vicinity of the ejection ports, and the pulverization portions 603 may be made larger as the distance from the ejection ports increases, or may be formed into a sharp blade shape.

Further, it may be so configured that switching valves 604a and 604b are provided in the middle of the piping from the circulation pump 601 to the ejection parts 602a and 602b, and reverse ejection parts extending from the switching valves 604a and 604b are provided separately from the ejection parts 602a and 602b. The reverse ejection parts 605a and 605b are provided to eliminate, when the holes 32b of the feeding area partition plate 32a are clogged, clogging of the holes 32b by switching the switching valves 604a and 604b to eject the water to be treated 31 from the outside of the feeding area 32 by the reverse ejection parts 605a and 605b. By doing so, it is possible to reduce labor required for maintenance of the raw sewage tank 3.

Further, the circulation pump 601 may be used concurrently with the pump 33. That is, it may be controlled such that the water to be treated 31 is sent to both of the first adjustment tank 4 and the ejection parts 602a and 602b, or, depending on the timing of the treatment (for example, when a small amount of filth is sent out to the first adjustment tank 4 and a large amount of filth is fed into the raw sewage tank 3, and vice versa), it may be controlled such that the water to be treated 31 is sent out only to the first adjustment tank 4, or it may be controlled such that the water to be treated 31 is sent out only to the ejection parts 602a and 602b.

As described above, in the bio-toilet system according to the present embodiment, the water to be treated 31 stored outside the feeding area 32 in the raw sewage tank 3 is stirred by the water flow generated when it is returned to the inside of the feeding area 32, so that parts for stirring (such as, for example, a stirring rod, a stirring blade, a stirring edge, and/or a motor) are not required, and it is possible to reduce cost and labor required for maintenance. At the same time, the water to be treated 31 outside the feeding area 32 is circulated into the feeding area 32, so that it is possible to more finely pulverize the solids.

### (Fourth Embodiment of the Present Invention)

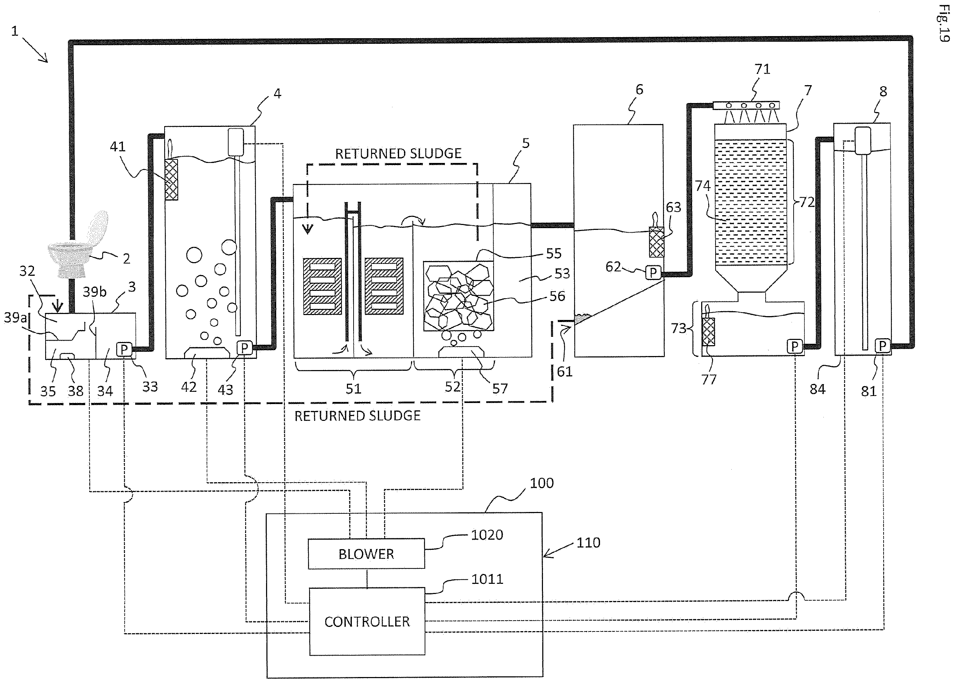

A purification system according to the present embodiment will be described with reference to FIGs. 19 to 22. Also in the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet, as is the case with each embodiment mentioned above. In addition, the description that overlaps with each embodiment mentioned above will be omitted in the present embodiment.

A control device is required to control a toilet system, and there is a possibility that such a control device will be damaged by high temperature environment in summer and/or storage environment of the device. Therefore, in order to maintain normal operation of the toilet system, it is necessary to efficiently perform waste heat utilization and cooling of the control device. Further, particularly in winter, microorganisms will be inactive due to the decrease in temperature, so that it is necessary to control temperature so as to increase the temperature of a treatment tank to activate the microorganisms.

The present embodiment provides an energy-saving and extremely efficient bio-toilet system by utilizing heat generated in the control device and heat absorption by the outside air.

FIG. 19 is a schematic diagram showing a configuration of the bio-toilet system according to the present embodiment. The bio-toilet system 1 is provided with: a raw sewage tank 3 that physically pulverizes filth that has been flushed from a toilet 2; a first adjustment tank 4 that performs aerobic treatment by anaerobic bacteria on, while storing, water to be treated 31 containing the pulverized filth; a septic tank 5 that performs first anaerobic treatment by anaerobic bacteria and second aerobic treatment by aerobic bacteria; a second adjustment tank 6 that performs anaerobic treatment by anaerobic bacteria on, while storing, the water to be treated that has been treated in the septic tank 5; a reaction tank 7 that decomposes organic substances contained in the water to be treated into carbon dioxide and water; a washing tank 8 that stores the water to be treated that has been purified as reclaimed water; and a control unit 100 including, for example, a controller 1011 that monitors and controls the entire system, and a blower 1020 that sends out air to air diffusion pipes arranged in each tank. The treatment of the bio-toilet system is the same as that of each embodiment mentioned above.

In addition, the bio-toilet system 1 may be provided with: a solar panel that converts energy obtained from sunlight into electricity; and a secondary battery that charges the generated electricity.

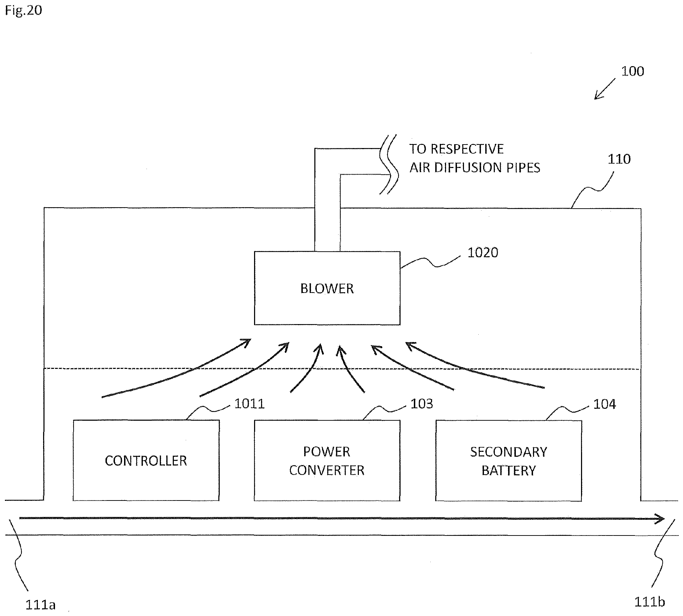

FIG. 20 is a diagram showing a configuration of the control unit 100 in FIG. 19. As described above, the control unit 100 includes at least: the controller 1011 that monitors and controls the entire bio-toilet system 1; and the blower 1020 that sends out air to air diffusion pipes 38 disposed in the raw sewage tank 3, air diffusion pipes 42 disposed in the first adjustment tank 4, and air diffusion pipes 57 disposed in the septic tank 5. In addition, the control unit 100 may include, for example, a power converter 103 that converts power between AC and DC, and a secondary battery 104 that stores the power generated by the solar panel 12.

Each of these devices is stored in one common housing 110. The controller 1011, the power converter 103, and the secondary battery 104 generate heat depending on the use thereof, and in the worst case, the heat may cause the devices to stop. In general, it is often the case that a cooling sheet is used, or a fan is attached to cool the devices. In the case of using the cooling sheet, maintenance work such as replacement of the cooling sheet occurs, which is not efficient. Therefore, in the present embodiment, the controller 1011 is cooled by taking the outside air into the housing 110 by a fan.

On the other hand, particularly in winter, microorganisms may become inactive and efficiency of the treatment may decrease, so that it is necessary to raise the temperature to some extent in order to activate the microorganisms. If a heater or the like is used for that purpose, it will lead to an increase in power consumption. It is possible to raise the temperature without consuming electric power by using a solar water heater as disclosed in the reference (Japanese Patent Laid-Open No. 2006-263418), but by the installation of the solar water heater, not only the system will be made larger but also regular maintenance will occur. Further, it will be deprived of opportunities to generate energy by solar power generation or the like in an area where the solar water heater is installed.

Therefore, in the present embodiment, the excess heat produced in the control unit 100 is transferred to each tank by the blower 1020, thereby making it possible to keep the temperature in each tank as high as possible while lowering the temperature of the control unit 100. In FIG. 20, the controller 1011, the power converter 103, the secondary battery 104 and the like (hereinafter, referred to as controller 1011 and the like) that have a high heat-generating property are arranged in a lower stage of the housing 110, and the blower 1020 is arranged in an upper stage thereof. Air can flow between the controller 1011 and the blower 1020, and the air warmed by the controller 1011 and the like rises to the blower 1020 side.

The blower 1020 sucks the air in the housing 110 and sends out the air in a high-pressure state to each item of the air diffusion pipes (the air diffusion pipes 38, 42, and 57). The air sent out by the blower 1020 is the air having been warmed by the controller 1011 and the like, and such air is sent out to each tank through each item of the air diffusion pipes, whereby the heat produced in the controller 1011 and the like is also transferred to each tank through each item of the air diffusion pipes.

In addition, although FIG. 20 shows the blower 1020 as one configuration, there may be some options: one is such that one blower 1020, as shown in this figure, sends out air to each item of the air diffusion pipes 38, 42, and 57 by branching of the piping; another is such that for each item of the air diffusion pipes 38, 42, and 57, a blower 1020 (for example, a blower 1020a for sending out air to the air diffusion pipes 38, a blower 1020b for sending out air to the air diffusion pipes 42, and a blower 1020c for sending out air to the air diffusion pipes 57) is individually provided. In this case, aerobic treatment is not performed in the raw sewage tank 3 (that is, there is no need to activate microorganisms present in the raw sewage tank 3), so that it is not necessarily required to transfer heat from the blower 1020a to the air diffusion pipes 38 disposed in the raw sewage tank 3. Therefore, the blower 1020a may be arranged at any place in the housing 110 other than the upper stage portion above the controller 1011 and the like. Further, the blower 1020b for sending out air to the air diffusion pipes 42 disposed in the first adjustment tank 4 and the blower 1020c for sending out air to the air diffusion pipes 57 disposed in the septic tank 5 may be arranged in parallel with each other in a horizontal direction because it is desirable that heat is evenly transferred to activate microorganisms that perform the aerobic treatment for each tank.

As shown in FIG. 20, circulation ports 111a and 111b for circulating air from the outside are formed in the housing 110, which forms a configuration that the outside air having a temperature lower than that inside the housing 110 can circulate. Provision of such circulation ports 111a and 111b makes it possible to cool the controller 1011 and the like more effectively and protect the device. Further, circulation of the outside air through the circulation ports 111a and 111b makes it possible to cool the blower 1020 itself.

In addition, at this time, in order to cool the controller 1011 and the like as effectively as possible and to effectively transfer the produced heat to each tank through each item of the air diffusion pips by the blower 1020, it is desirable to form the circulation ports 111a and 111b under the controller 1011 and the like for circulation. By doing so, the heat produced in the controller 1011 and the like is collected in an upper portion within the housing 110, and the low-temperature air influent from the outside is collected in a lower portion within the housing 110, so that it is possible to cool the controller 1011 and the like from below and, at the same time, it is possible for the blower 1020 to efficiently suck the air in the housing 110 that has been warmed by the controller 1011 and the like to rise.

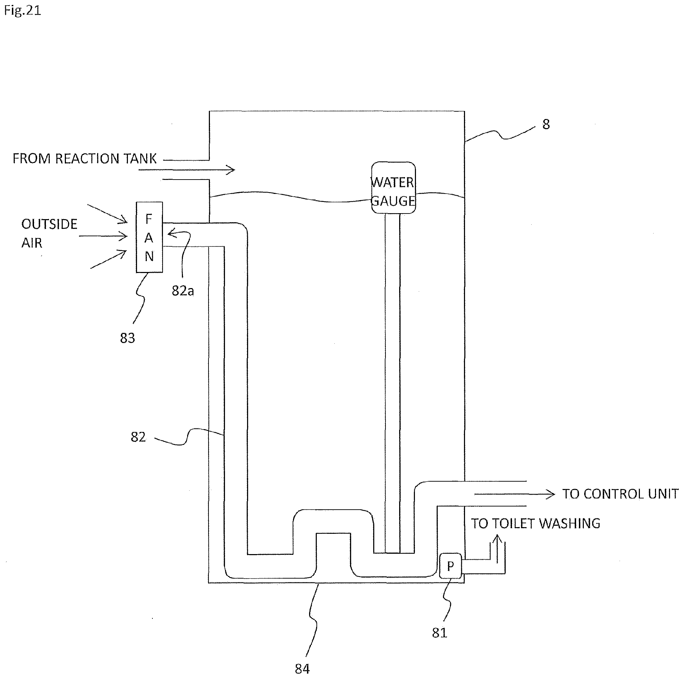

In order to lower the temperature of the air that circulates through the circulation ports 111a and 111b of the housing 110 in FIG. 20, the air may be cooled by utilizing the water stored in the bio-toilet system 1. FIG. 21 is a diagram showing a configuration of a piping when cooling air to be circulated in the housing. In the bio-toilet system 1 according to the present embodiment, it is the washing tank 8 that stores water relatively stably. The water stored in the washing tank 8 is water that has been already treated, which is reduced by the use of the toilet and constantly increased by the purification treatment, thereby resulting in a state where a relatively large amount of water is stably stored. Here, as shown in FIG. 21, the present embodiment utilizes the water stored in the washing tank 8, whereby the air circulating through the circulation ports 111a and 111b of the housing 110 is cooled by heat exchange.

In FIG. 21, a piping 82 for flowing the outside air into the housing 110 is connected to the inflow port 111a of the housing 110 through the inside of the washing tank 8. A fan 83 is disposed at an inlet 82a of the piping 82 to take in the outside air. The outside air taken in the piping 82 is cooled by heat exchange with the water to be treated stored in the washing tank 8 until it flows into the housing 110 through the piping 82. The cooled air flows into the housing 110 through the circulation port 111a of the housing 110 as it is, and cools the controller 1011 and the like efficiently.

The piping 82 is made of a material having high thermal conductivity in order to efficiently exchange heat with the water to be treated. Further, in order to maximize the contact area with the water to be treated even when a water level of the water to be treated is lowered, the piping 82 is disposed at least along a bottom surface portion 84 of the washing tank 8. At this time, the piping 82 at the bottom surface portion 84 may be structured to have a bellows shape to increase contact area, as shown in FIG. 21. Other than this, the contact area with the water to be treated may be increased by disposing fins (not shown) on the surface of the piping 82, or by forming the piping 82 in a spiral shape (not shown) along the bottom surface of the washing tank 8.

As described above, the outside air is cooled by the water to be treated stored in the washing tank 8 and the cooled air is sent out to the housing 110, thereby making it possible to suppress the temperature rise of the controller 1011 and the like and to minimize device failure and the like.

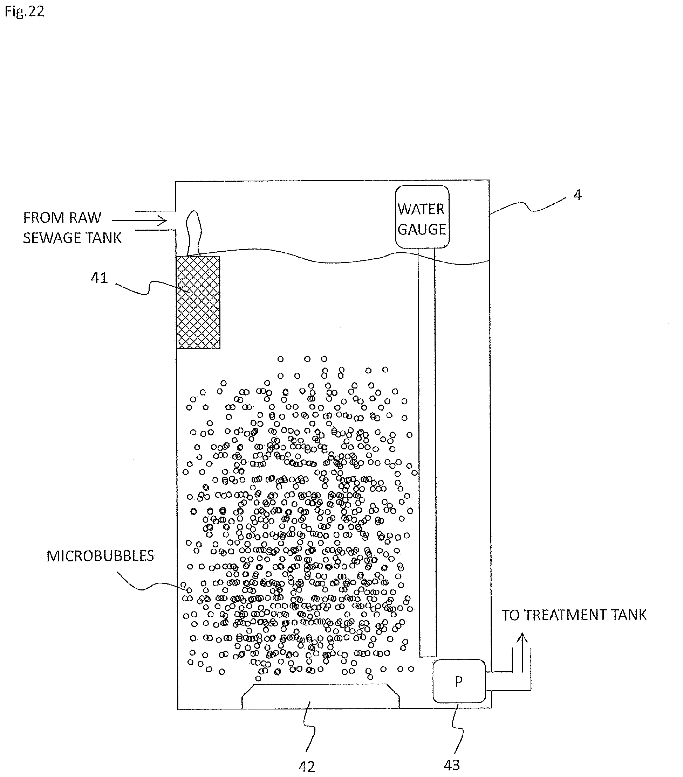

FIG. 22 is a diagram showing a state in which the air sent out from the blower 1020 is aerated in the first adjustment tank 4. Here, bubbles discharged from the air diffusion pipes 42 become micro bubbles. By making the bubbles discharged from the air diffusion pipes 42 into the micro bubbles, contact area between the bubbles and the water to be treated 31 becomes large, so that it is possible to transfer to the water to be treated 31 the heat of the controller 1011 and the like contained in the air sucked by the blower 1020. By doing so, the microorganisms in the first adjustment tank 4 is activated, and the aerobic treatment can be performed efficiently.

In addition, it is desirable that the air diffusion pipes 57 disposed in the septic tank 5 also discharge microbubbles into the water to be treated 31, as is the case with the first adjustment tank 4.

As described above, in the bio-toilet system according to the present embodiment, the blower 1020 and the controller 1011 and the like are arranged in the common space, and the blower 1020 sucks the air warmed by the controller 1011 and the like, and then the sucked air is discharged from the air diffusion pipes 42 and 57 disposed in the first adjustment tank 4 and the septic tank 5, so that the heat produced in the controller 1011 and the like is transferred through the blower 1020 to the first adjustment tank 4 and the septic tank 5, thereby making it possible to activate the microorganisms in the first adjustment tank 4 and the septic tank 5 while cooling the controller 1011 and the like (i.e., wasting heat of the controller 1011 and the like), resulting in that it is possible to drive the bio-toilet system 1 in an energy-saving and efficient manner.

Further, the blower 1020 and the controller 1011 and the like are arranged in the same housing 110, and the outside air flows in from the circulation port 111a formed in the housing 110, so that the heat produced in the controller 1011 and the like is preserved inside the housing 110, whereby it is possible to efficiently transfer such heat to the septic tank 5, the first adjustment tank 4, and the like. Furthermore, the outside air flows into the housing 110 from the circulation port 111a, so that it is possible to efficiently cool the controller 1011 and the like by such outside air and, at the same time, to generate a large heat drop in the housing 110 to effectively utilize energy.

Furthermore, the outside air that is flowed in from the inflow port 111a formed in the housing 110 is cooled by heat exchange in the washing tank 8, so that the outside air flowed in is cooled to a lower temperature by the water to be treated, thereby making it possible to efficiently cool the controller 1011 and the like by such cooled outside air and, at the same time, to generate a large heat drop in the housing 110 to effectively utilize energy.

Furthermore, the piping 82 through which the outside air flows is disposed at least along the bottom surface portion 84 of the washing tank 8, so that it is possible to minimize a decrease in efficiency of heat exchange even when the amount of water in the washing tank 8 is reduced, and, at the same time, it is possible for the outside air to exchange heat with the water in the washing tank 8 through the piping 82 at a long distance, resulting in that it is possible to cool the outside air efficiently.

Furthermore, the blower 1020 is arranged in the upper stage above the controller 1011 and the like in the housing 110, so that the air that has been warmed by the heat produced in the controller 1011 and the like moves upward in the housing 110, thereby making it possible for the blower 1020 to efficiently suck said air that has moved to transfer the heat to the septic tank 5 and the first adjustment tank 4.

Furthermore, the air discharged from the air diffusion pipes 42 and 57 caused by the blower 1020 is made into the micro bubbles, so that the air is sent out as fine bubbles in the septic tank 5 and the first adjustment tank 4, and the contact area between the water to be treated in the septic tank 5 and the first adjustment tank 4 and the air to be sent out becomes large, thereby making it possible to transfer heat efficiently.

### (Fifth Embodiment of the Present Invention)

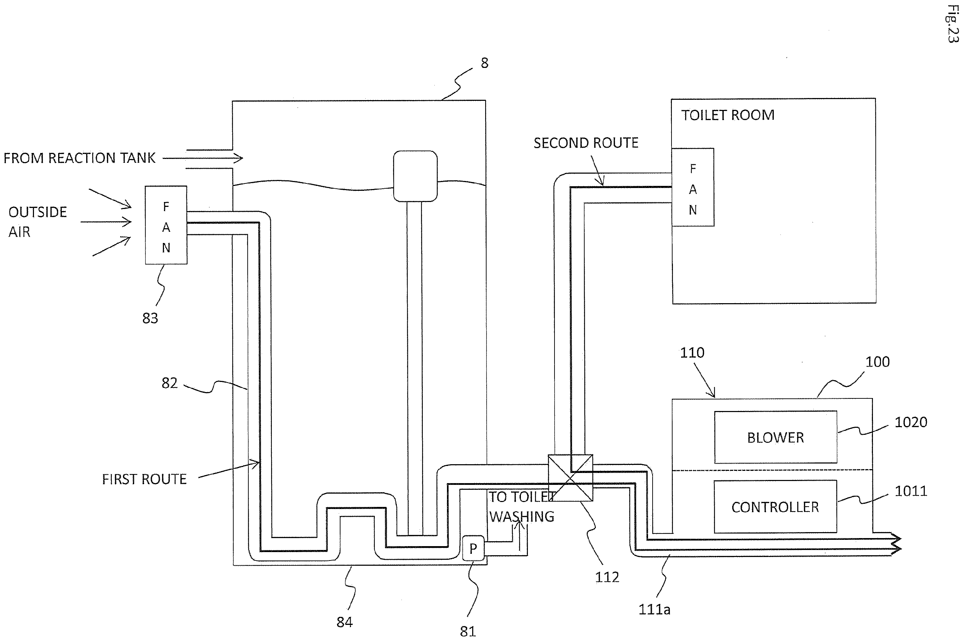

A purification system according to the present embodiment will be described with reference to FIG. 23. Also in the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet, as is the case with each embodiment mentioned above. In addition, the description that overlaps with each embodiment mentioned above will be omitted in the present embodiment. The bio-toilet system according to the present embodiment is an application of the bio-toilet system according to the fourth embodiment, in which the air flowing into the housing 110 where the blower 1020, the controller 1011 and the like are stored is switched according to the temperature of the outside air.

FIG. 23 is a diagram showing a configuration of a piping for air to be circulated in the housing in the bio-toilet system according to the present embodiment. In FIG. 23, there are two flow passages for air that is flowed into the housing 110. One is the first route in which the outside air flows in from the inflow port 111a while exchanging heat, passing through the washing tank 8, and the other is the second route in which air is taken in from a room inside of the toilet and flows in. A solenoid valve 112 is disposed at a branch point of these routes, and the controller 1011 controls opening/closing of the valve.

Specifically, the controller 1011 receives temperature information from a thermometer (not shown) placed outside the bio-toilet system 1. When the temperature outside is above the freezing point, the controller 1011 controls the solenoid valve 112 so as to take in the outside air from the first route. When the temperature of the outside air is below the freezing point, the controller 1011 controls the solenoid valve 112 so as to take in air through the second route from the toilet room where the temperature is higher than the outside air temperature. This is to prevent, when the controller 1011 and the like are cooled by the air below the freezing point, a part of the controller 1011 from being damaged due to freezing because the temperature of the air is too low.

In addition, in FIG. 23, the branch point of the piping 82 is provided at the rear stage of the washing tank 8 and immediately before the inflow port 111a of the housing 110, but it may be branched at the front stage portion of the washing tank 8.

As described above, in the bio-toilet system according to the present embodiment, the air flowing into the housing 110 is switched according to the outside air temperature, so that it is possible to reliably prevent damage to the controller 1011 and the like and to reduce time and effort required for maintenance work.

### (Sixth Embodiment of the Present Invention)

A purification system according to the present embodiment will be described with reference to FIG. Also in the present embodiment, a bio-toilet system will be described as an example of the purification system, but this purification system can be applied to treatment of filth that can be decomposed by microorganisms, such as treatment of livestock excrement, treatment of domestic wastewater and raw garbage, and the like, other than a toilet, as is the case with each embodiment mentioned above. In addition, the description that overlaps with each embodiment mentioned above will be omitted in the present embodiment.

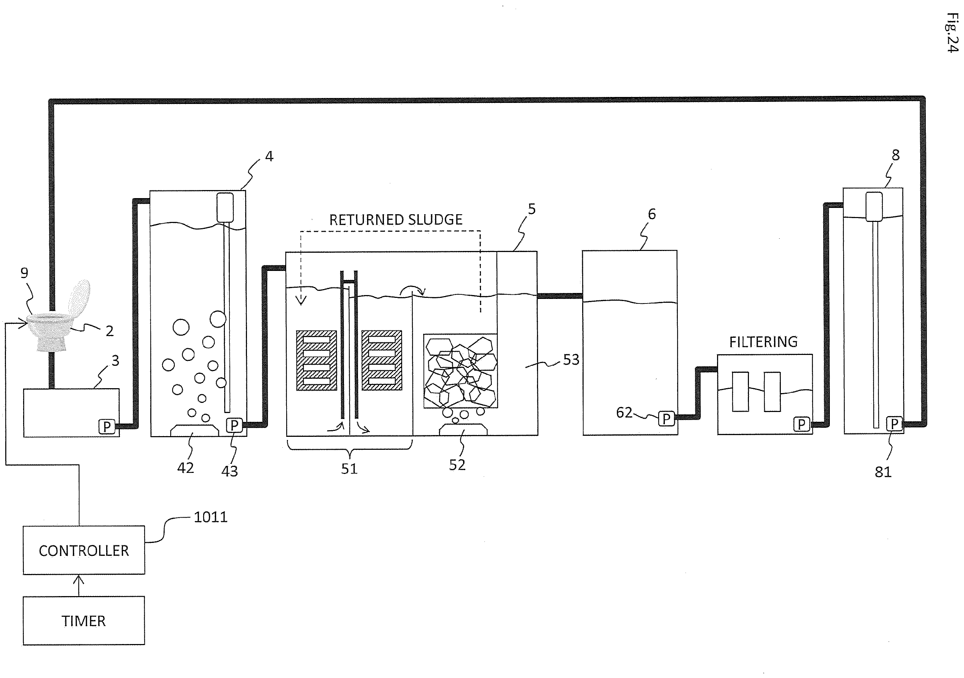

FIG. 24 is a schematic diagram showing a configuration of the bio-toilet system according to the present embodiment. The bio-toilet system 1 is an improvement of the configuration of FIG. 2 in the first embodiment, in which a controller 1011 controls automatic driving of flushing the toilet 2 on a regular or irregular basis based on time information measured by a timer to circulate water of the entire system, instead of the process of returned sludge from the second adjustment tank 6 to the raw sewage tank 3.

In the bio-toilet system 1, the washing water stored in the washing tank 8 may deteriorate when it is not used for a long time. That is, as described in the first embodiment, when the process of returned sludge from the second adjustment tank 6 to the raw sewage tank 3 works, the water to be treated 31 from the raw sewage tank 3 to the second adjustment tank 6 flows, so that it is possible to prevent the water to be treated 31 from deteriorating. However, the washing water stored in the washing tank 8 does not flow, so that the water may deteriorate. In the present embodiment, flushing of the toilet 2 is automatically driven on a regular or irregular basis, so that the water in the entire system flows, thereby making it possible to prevent the water including the washing water from deteriorating.

Further, in FIG. 24, the bio-toilet system 1 has a configuration in which the reaction tank 7 is not provided. That is, such a state is made that activated sludge is moderately present in the second adjustment tank 6, whereby it is possible to omit the treatment of the reaction tank 7 and to produce the washing water by filtering only. In addition, omitting the treatment of the reaction tank 7 makes it unnecessary to use the woody biochips 74 as shown in the first embodiment, so that the filtering with the coloring removal filter 75 can be also made unnecessary, thereby making it possible to simplify the system configuration and reduce the cost.

Further, in FIG. 24, it is desirable that the raw sewage tank 3 is structured to pulverize filth and, at the same time, to pump up the water to be treated 31 containing the pulverized filth to the first adjustment tank 4.

### Reference Signs List

- 1: bio-toilet system
- 2: toilet
- 3: raw sewage tank
- 4: first adjustment tank
- 5: septic tank
- 6: second adjustment tank
- 7: reaction tank
- 8: washing tank
- 9: washing toilet seat
- 10: rainwater storage tank
- 11: pressurization part
- 12: solar panel
- 13: secondary battery
- 31: water to be treated
- 32: feeding area
- 32a: feeding area partition plate
- 32b, 35b: hole
- 32c: upper surface
- 32d, 32g: piping
- 32e: stirring blade
- 32f: motor
- 32h: lid
- 33: pump
- 34: sending area
- 35: inflow port
- 35a: first raw sewage tank partition plate
- 35c: release area
- 36: input port
- 36a: second raw sewage tank partition plate
- 37: stirring blade
- 37a: motor
- 38: blower (air diffusion pipes)
- 39: partition plate
- 39a: first member
- 39b: second member
- 39c: third member
- 41: bacterial bed area
- 42: blower (air diffusion pipes)
- 43: pump
- 51: anaerobic treatment area
- 52: aerobic treatment area
- 53: sending area
- 55: frame body
- 56: contact material
- 57: blower (air diffusion pipes)
- 61: tip portion
- 62: pump
- 63: bacterial bed area
- 67: piping
- 68: solenoid valve
- 71: spraying part
- 72: decomposition area
- 73: parking area
- 74: biochip
- 75: coloring removal filter
- 76: bacteria removal filter
- 82: piping
- 82a: inlet
- 83: fan
- 84: bottom portion
- 100: control unit
- 101: sludge receiving part
- 102a, 102b: locking part
- 103: power convertor
- 104: secondary battery
- 110: housing
- 111a, 111b: circulation port
- 112: solenoid valve
- 121: rain gutter
- 122: pipe
- 134: second area
- 135: first area
- 301: hole
- 302: float
- 601: circulation pump
- 602a, 602b: ejection part
- 603: pulverization portion
- 604a, 604b: switching valve
- 605a, 605b: reverse ejection part
- 1011: controller
- 1020 (1020a, 1020b, 1020c): blower

## Claims

1. A purification system that performs microbial treatment on water to be treated containing filth and circulates the water to be treated as washing water, the system comprising:
a raw sewage tank into which the water to be treated containing filth is fed;
a first adjustment tank that stores the water to be treated discharged from the raw sewage tank while performing aerobic treatment thereon by aeration and discharges the stored water to be treated by a pump;
a septic tank that performs microbial treatment on the water to be treated discharged from the first adjustment tank;
a second adjustment tank that stores the water to be treated discharged from the septic tank while performing anaerobic treatment thereon and discharges the stored water to be treated by a pump;
a reaction tank that decomposes organic matter in the water to be treated discharged from the second adjustment tank; and
a washing water tank that stores the water to be treated discharged from the reaction tank for use as washing water.

2. The purification system according to claim 1, comprising:
control means for controlling driving of the pump of the second adjustment tank based on at least a storage amount of water to be treated stored in the reaction tank.

3. The purification system according to claim 1 or 2, comprising:
control means for controlling driving of the pump of the first adjustment tank based on at least a storage amount of the water to be treated stored in the second adjustment tank.

4. The purification system according to claim 1 or 2, comprising:
control means for controlling driving of the pump of the first adjustment tank based on at least water quality of the water to be treated stored in the second adjustment tank.

5. The purification system according to any one of claims 1 to 4, wherein:
the second adjustment tank and the raw sewage tank are arranged adjacent to each other and connected through a piping, a valve being arranged in a middle of the piping; and
the second adjustment tank is internally tapered from a position above an upper surface position of the raw sewage tank in the second adjustment tank toward the upper surface position, an opening being provided at a tip of the tapered shape, and the piping extending from the opening being connected to an upper surface portion of the raw sewage tank.

6. The purification system according to claim 5, wherein:
the valve is a solenoid valve; and
the purification system comprises control means for controlling opening of the solenoid valve on a regular or irregular basis.

7. The purification system according to any one of claims 1 to 6, wherein:
a bacterial bed bag, in which a contact material on which bacteria are implanted is charged, is placed on inner wall surfaces of the first adjustment tank and the second adjustment tank.

8. The purification system according to any one of claims 1 to 7, comprising:
a hollow fiber filter that passes the water to be treated that has passed through the reaction tank; and
a reverse osmosis membrane filter that passes the water to be treated that has passed through the hollow fiber filter.

9. The purification system according to any one of claims 1 to 8, comprising:
circulation control means for controlling circulating in the system the washing water stored in the washing water tank on a regular or irregular basis.
